# EUROPEAN PATENT SPECIFICATION

(11) **EP 4 040 762 B1**
(45) Date of publication and mention of the grant of the patent: **14.02.2024**
(21) Application number: 20882542.2
(22) Date of filing: 26.08.2020
(51) Int. Cl.: H04M 1/02, H04M 1/04, H04M 1/18, G09F 9/30, G06F 1/16

(54) **ELECTRONIC DEVICE**
ELEKTRONISCHE VORRICHTUNG
DISPOSITIF ÉLECTRONIQUE

(30) Priority: 31.10.2019 CN 201911055985
(43) Date of publication of application: 10.08.2022
(73) Proprietor: Huawei Technologies Co., Ltd., Shenzhen, Guangdong 518129 (CN)
(72) Inventor: SHENG, Jianqing, Shenzhen, Guangdong 518129 (CN); YU, Weidong, Shenzhen, Guangdong 518129 (CN); XU, Zhixiao, Shenzhen, Guangdong 518129 (CN); MAO, Weihua, Shenzhen, Guangdong 518129 (CN)
(74) Representative: Thun, Clemens
(86) International application number: PCT/CN2020/111208
(87) International publication number: WO 2021/082678

(56) References cited:
- EP-A1- 4 016 971
- WO-A1-2019/174223
- CN-A- 105 761 615
- CN-A- 109 495 621
- CN-A- 110 995 892
- CN-U- 208 734 722
- US-A1- 2014 111 954
- US-A1- 2016 295 709
- US-A1- 2019 292 827
- US-B1- 9 173 288

## Description

### TECHNICAL FIELD

This application relates to the field of terminal devices, and in particular, to an electronic device.

### BACKGROUND

A foldable mobile phone is a current research hotspot. When a conventional foldable mobile phone is folded, a flexible screen is seriously bent. Consequently, reliability of the flexible screen is reduced, and the flexible screen is even damaged.

The document US 9,173,288 B1 shows a foldable display apparatus, especially for a mobile telephone. The device comprises a foldable display supported by a first housing and a second housing.

The document US 2016/0295709 A1 also shows a foldable display device. Also here, a foldable display is supported by two housing elements.

The document US 2014/0111954 A1 moreover shows a further foldable display device. Also here, a foldable display is held by two housing elements.

Late published document EP 4 016 971 A1, published on 22.06.2022, shows an electronic device having a foldable display. Especially, a mobile telephone is shown.

### SUMMARY

The present invention is defined by claim 1. Further advantageous developments are shown by the dependent claims.

This application provides an electronic device, so that bending of a flexible screen can be reduced, reliability of the flexible screen can be improved, and the flexible screen is prevented from being damaged.

According to a first aspect, this application provides an electronic device, and the electronic device includes a flexible screen, a hinge, a first housing, a second housing, and a supporting member. The flexible screen includes a first flat part, a bending part, and a second flat part, and the bending part is connected between the first flat part and the second flat part. Two opposite sides of the hinge are separately connected to the first housing and the second housing, the hinge is configured to implement relative rotation between the second housing and the first housing through mechanical motion, the second housing has a body appearance surface, and the first flat part is fastened to the first housing. The supporting member is accommodated in the second housing, the supporting member has a first end and a second end that are opposite to each other, the first end is connected to the hinge, the second end is movably connected to an end that is of the second housing and that is away from the hinge, and the second flat part is fastened to a surface that is of the supporting member and that is away from the body appearance surface. In a process in which the second housing and the first housing approach each other, the supporting member rotates relative to the first housing, and the first end drives the second flat part to approach the body appearance surface.

In this application, a connection (which is equivalent to a link) means that parts are in contact with each other and there is acting force between the parts. The connection may include a fixed connection and a movable connection. The fixed connection means that parts are connected and there is no relative movement between the parts. The movable connection means that there may be relative motion between parts, and the movable connection includes but is not limited to a sliding connection, a rotational connection, and the like. In this application, a connection between the hinge and a holder of the first housing and the second housing may be a fixed connection, a connection between the first end of the supporting member and the hinge may be a fixed connection or a movable connection, and a connection between the second end of the supporting member and the second housing is a movable connection.

The hinge can be deformed, so that the first housing and the second housing are folded or unfolded. Being folded means that the first housing and the second housing are stacked, and the first housing and the second housing are attached to each other with no spacing or keep a specific gap. Being unfolded means that the first housing and the second housing are unfolded to form a specific bending angle or are entirely flattened. The electronic device is in a folded state when the first housing and the second housing are folded, and the electronic device is in an unfolded state when the first housing and the second housing are unfolded.

In an implementation, the hinge may include a holder, a first rotating shaft, a second rotating shaft, a first moving member, a second moving member, and a cover member. The holder has a holder inner cavity, the holder inner cavity has an opening, the first rotating shaft, the second rotating shaft, the first moving member, and the second moving member are all mounted in the holder inner cavity, and the cover member covers the opening of the holder inner cavity, to package the first rotating shaft, the first moving member, the second rotating shaft, the second moving member, and the first moving member inside the holder. This makes a structure of the hinge complete and compact, and increases structural strength of the hinge.

The first rotating shaft is used as a rotating shaft of the first housing. One end of the first moving member rotates around the first rotating shaft, and the other opposite end is fixedly connected to the first housing. Therefore, the first housing can rotate around the first rotating shaft by using the first moving member. The second rotating shaft is used as a rotating shaft of the second housing. One end of the second moving member rotates around the second rotating shaft, and the other opposite end is fixedly connected to the second housing. Therefore, the second housing can rotate around the second rotating shaft by using the second moving member.

In an implementation, the first rotating shaft and the second rotating shaft may be arranged in parallel at staggered positions in an axial direction, and the first rotating shaft and the second rotating shaft may form rotational fitting and rotate in opposite directions to implement torque transmission. An end that is of the second moving member and that is connected to the second housing and an end that is of the first moving member and that is connected to the first housing are separately located on two sides of the second rotating shaft or the first rotating shaft. Therefore, the first moving member and the second moving member can synchronously rotate in opposite directions, so that the second housing and the first housing can also synchronously rotate in opposite directions. Such a synchronous rotation design can accelerate folding and unfolding speeds of the electronic device, so that a user can quickly fold and unfold the electronic device, and waiting time is reduced. In addition, when the user exerts force on the first housing or the second housing to unfold or fold the electronic device, in the synchronous rotation design, the user only needs to perform an operation on either side of the first housing and the second housing, and does not need to perform an operation on both sides of the first housing and the second housing, so that the operation can be simplified, and user experience can be improved.

The supporting member is disposed on an inner side of the second housing, and the inner side is a side that is of the second housing and that faces the first housing when the electronic device is folded. The first end of the supporting member is in contact with the hinge and is fixedly connected or movably connected to the hinge, and a second end of the supporting member is constrained at the end that is of the second housing and that is away from the hinge. The supporting member can rotate relative to the first housing when driven by the second housing, and a rotation axis along which the supporting member rotates relative to the first housing and a rotation axis along which the second housing rotates relative to the first housing are not collinear. Because the supporting member, the hinge, and the second housing are in the foregoing connection relationship, in a process in which the second housing approaches the first housing, the first end of the supporting member approaches the body appearance surface of the second housing. Finally, when the second housing and the first housing are brought together, a distance between the first end and the body appearance surface is minimum. In a process in which the supporting member rotates relative to the first housing, the distance between the first end and the body appearance surface may gradually decrease. Alternatively, at some positions in the rotating process, the distance between the first end and the body appearance surface may not successively decrease, for example, reciprocating may appear, but is generally in a decreasing trend.

In the solution of this application, in a folding process of the electronic device, the supporting member pulls a binding part between the second flat part and the bending part in a direction away from the first flat part, so that a curvature change between the second flat part and the bending part and a curvature change between the first flat part and the bending part are reduced, and transition between the second flat part and the bending part and transition between the first flat part and the bending part are as smooth as possible. In this way, bending of the flexible screen is reduced, and damage caused to the flexible screen due to excessive bending is avoided, so that reliability of the flexible screen is improved, and a life cycle of the flexible screen is prolonged.

In the solution of this application, the flexible screen can be located at a neutral layer position of the electronic device by properly designing a structural dimension of a corresponding part in the electronic device. In a bending process, the flexible screen located at the neutral layer position can keep a length basically unchanged, and stress is extremely small. This can ensure that the flexible screen has a definite track in a bending process, and greatly reduces damage caused by bending.

According to the invention, the hinge includes a base and a third moving member, the base has an arc-shaped sliding slot, one end of the third moving member fits the arc-shaped sliding slot through sliding, the other opposite end of the third moving member is fixedly connected to the first end, and the second end and the end that is of the second housing and that is away from the hinge form a sliding connection and a rotational connection.

The base may be a structure formed on an inner surface of the holder, a local surface of the base is concave to form the arc-shaped sliding slot, an inner wall of the arc-shaped sliding slot is an arc surface, and a center line of the arc-shaped sliding slot and a rotation axis of the second rotating shaft are not collinear. The third moving member has an end that fits the inner wall of the arc-shaped sliding slot, and the end may slide along the inner wall of the arc-shaped sliding slot, so that the first end of the supporting member rotates around the center line of the arc-shaped sliding slot. The second end of the supporting member and the end that is of the second housing and that is away from the hinge both fit each other through sliding and fit each other through rotation, and the second end may both slide and rotate relative to the end that is of the second housing and that is away from the hinge.

Because the first end of the supporting member can rotate relative to the base, the second end can slide and rotate relative to the second housing, and in a process in which the second housing approaches the first housing, the first end approaches the body appearance surface, so that the binding part between the second flat part and the bending part is pulled in a direction away from the first flat part. Therefore, the curvature change between the second flat part and the bending part and the curvature change between the first flat part and the bending part are reduced, and the transition between the second flat part and the bending part and the transition between the first flat part and the bending part are as smooth as possible. In this way, bending of the flexible screen is reduced, and damage caused to the flexible screen due to excessive bending is avoided, so that reliability of the flexible screen is improved, and a life cycle of the flexible screen is prolonged.

In an implementation, there is a guide rail at the end that is of the second housing and that is away from the hinge, there is a guide post at the second end, the guide post fits the guide rail, and the guide post can slide and rotate relative to the guide rail. Fitting between the guide rail and the guide post can implement sliding fitting and rotational fitting between the second end of the supporting member and the second housing.

According to the invention, the hinge includes a base and a third moving member, the base has an arc-shaped sliding slot, one end of the third moving member fits the arc-shaped sliding slot through sliding, the other opposite end of the third moving member is slidably connected to the first end, and the second end is rotatably connected to the end that is of the second housing and that is away from the hinge.

The base may be a structure formed on an inner surface of the holder, a local surface of the base is concave to form the arc-shaped sliding slot, an inner wall of the arc-shaped sliding slot is an arc surface, and a center line of the arc-shaped sliding slot and a rotation axis of the second rotating shaft are not collinear. The third moving member has an end that fits the inner wall of the arc-shaped sliding slot, and the end may slide along the inner wall of the arc-shaped sliding slot, so that the first end of the supporting member performs compound motion, and rotates around the center line of the arc-shaped sliding slot and also slides relative to the third moving member.

Because the first end of the supporting member can rotate relative to the base and slide relative to the third moving member, the second end can slide and rotate relative to the second housing, and in a process in which the second housing approaches the first housing, the first end approaches the body appearance surface, so that the binding part between the second flat part and the bending part is pulled in a direction away from the first flat part. Therefore, the curvature change between the second flat part and the bending part and the curvature change between the first flat part and the bending part are reduced, and the transition between the second flat part and the bending part and the transition between the first flat part and the bending part are as smooth as possible. In this way, bending of the flexible screen is reduced, and damage caused to the flexible screen due to excessive bending is avoided, so that reliability of the flexible screen is improved, and a life cycle of the flexible screen is prolonged.

In an implementation, the supporting member includes a first bearing part and a first fitting part, the first end and the second end are separately two opposite ends of the first bearing part, the first fitting part is disposed on a surface that is of the first end and that faces the second housing, and the other opposite end of the third moving member is slidably connected to the first fitting part located at the first end. In such a structure of the supporting member, the first end of the supporting member can rotate relative to the base and slide relative to the third moving member, and the second end can rotate relative to the second housing.

According to the invention, the hinge includes a base, the base has an arc-shaped sliding slot, the first end is capable of sliding relative to the arc-shaped sliding slot along a circumference of the arc-shaped sliding slot, and the second end is rotatably connected to the end that is of the second housing and that is away from the hinge.

The base may be a structure formed on an inner surface of the holder, a local surface of the base is concave to form the arc-shaped sliding slot, an inner wall of the arc-shaped sliding slot is an arc surface, and a center line of the arc-shaped sliding slot and a rotation axis of the second rotating shaft are not collinear. The first end of the supporting member can be in direct contact with the arc-shaped sliding slot, and slide in the arc-shaped sliding slot along the circumference of the arc-shaped sliding slot; or the first end can slide relative to the arc-shaped sliding slot by using an intermediate part that fits the arc-shaped sliding slot, and a relative sliding direction is the circumference of the arc-shaped sliding slot. The first end of the supporting member performs compound motion, and rotates around the second end and slides relative to the arc-shaped sliding slot.

Because the first end of the supporting member can slide relative to the arc-shaped sliding slot along the circumference of the arc-shaped sliding slot and rotate relative to the second end, the second end can rotate relative to the second housing, and in a process in which the second housing approaches the first housing, the first end approaches the body appearance surface, so that the binding part between the second flat part and the bending part is pulled in a direction away from the first flat part. Therefore, the curvature change between the second flat part and the bending part and the curvature change between the first flat part and the bending part are reduced, and the transition between the second flat part and the bending part and the transition between the first flat part and the bending part are as smooth as possible. In this way, bending of the flexible screen is reduced, and damage caused to the flexible screen due to excessive bending is avoided, so that reliability of the flexible screen is improved, and a life cycle of the flexible screen is prolonged.

In an implementation, the first end of the supporting member is in direct contact with the arc-shaped sliding slot, the first end is in a shape that fits the arc-shaped sliding slot, and the first end fits the arc-shaped sliding slot through sliding.

In another implementation, the hinge includes a conversion bracket, the conversion bracket fits the arc-shaped sliding slot through sliding, and the first end fits the conversion bracket through sliding. The conversion bracket is disposed between the first end of the supporting member and the arc-shaped sliding slot, the conversion bracket may be in a shape that fits the inner wall of the arc-shaped sliding slot, and the conversion bracket is in contact with the inner wall of the arc-shaped sliding slot and may slide along the inner wall of the arc-shaped sliding slot. The first end is in contact with and slides relative to the conversion bracket. By using the conversion bracket, the first end of the supporting member can slide relative to the arc-shaped sliding slot along the circumference of the arc-shaped sliding slot.

Total sliding distance of the first end relative to the arc-shaped sliding slot = Sliding distance of the first end relative to the arc-shaped cavity + Sliding distance of the conversion bracket relative to the arc-shaped sliding slot. The total sliding distance can enable folding and unfolding of the electronic device, and is a design value determined based on an actual product requirement. The sliding distance of the conversion bracket relative to the arc-shaped sliding slot depends on a length of the arc-shaped sliding slot, the length of the arc-shaped sliding slot may affect a contour dimension of the base and further affect a width of the holder, and the width of the holder determines a maximum thickness of the electronic device during folding. It can be learned from the foregoing mathematical relationship that, when the sliding distance of the conversion bracket relative to the arc-shaped sliding slot is less than the total sliding distance, the total sliding distance is implemented, and only a relatively small sliding distance needs to be generated by the conversion bracket relative to the arc-shaped sliding slot. Therefore, through design of the conversion bracket, it can be ensured that when the total sliding distance is determined, the length of the arc-shaped sliding slot is shortened, and the width of the holder is reduced, so that the maximum thickness of the electronic device during folding can be reduced.

In an implementation, the conversion bracket has an arc-shaped cavity, a shape of the arc-shaped cavity is similar to a shape of the arc-shaped sliding slot, and the first end fits the arc-shaped cavity through sliding. In such a structure of the conversion bracket, the first end of the supporting member can slide relative to the conversion bracket along the circumference of the arc-shaped sliding slot, to slide relative to the arc-shaped sliding slot along the circumference.

In an implementation, the supporting member includes a second fitting part, a second bearing part, and a rotation part, the second bearing part is connected between the second fitting part and the rotation part, an end that is of the second fitting part and that is away from the second bearing part is used as the first end, and the rotation part is used as the second end. In such a structure of the supporting member, the first end can rotate around the second end and also slide relative to the arc-shaped sliding slot, and the second end can rotate relative to the second housing.

In an implementation, the second fitting part includes a connection part and a fitting post, the connection part is connected between the second bearing part and the fitting post, and the fitting post is used as the first end. In such a structure of the second fitting part, the first end can slide relative to the arc-shaped sliding slot along the circumference of the arc-shaped sliding slot.

In an implementation, a thickness of an end that is of the second housing and that is close to the hinge is greater than a thickness of the end that is of the second housing and that is away from the hinge, and when the second housing and the first housing approach each other, a thickness of an end that is of the electronic device and that is close to the hinge is greater than a thickness of an end that is of the electronic device and that is away from the hinge.

The thickness of the second housing may continuously and smoothly change gradually; in other words, a thickness changing rate of the second housing may be basically constant. If coordinates of each position on the second housing and a corresponding thickness are used as variables to construct a thickness curve, and the thickness curve is basically an oblique straight line. The thickness of the electronic device during folding may also continuously and smoothly change gradually, and a meaning of continuous and smooth gradual change is the same as the foregoing description. Alternatively, the thickness of the second housing may abruptly change, and the thickness curve of the second housing may be a non-straight line. Alternatively, the thickness of the electronic device during folding may abruptly change, and a meaning of the sudden change is the same as the foregoing description.

From the end close to the hinge to the end away from the hinge, a thickness of the first housing may basically remain unchanged, or continuously and smoothly decrease, or the thickness is generally in a decreasing trend but has a sudden change. Alternatively, from the end close to the hinge to the end away from the hinge, the thickness of the first housing may continuously and smoothly increase, or the thickness is generally in an increasing trend but has a sudden change. All the foregoing manners meet a premise that when the electronic device is folded, the thickness of the end that is of the electronic device and that is close to the hinge is greater than the thickness of the end that is of the electronic device and that is away from the hinge.

The maximum thickness of the electronic device is limited by a relatively thick part in an entire machine, such as, a camera module or the hinge. It is relatively difficult to make the relatively thick part thin, and an end that is of a conventional electronic device and that is close to the hinge in a folded state and a thickness of an end away from the hinge are basically consistent. Consequently, an overall thickness of the conventional electronic device is relatively large. In this implementation, the thickness of the end that is of the electronic device and that is close to the hinge during folding is relatively large, and the thickness of this end may be basically the same as that of the conventional electronic device. The thickness of the end that is of the electronic device and that is away from the hinge during folding is reduced. Compared with the conventional electronic device, the electronic device seems thinner visually, and is lighter, and holding feeling of the user is also better. In particular, when the thickness of the electronic device is gradually changed continuously and smoothly, the entire electronic device has a fluent line, and the appearance experience is improved. In addition, in the solution in this implementation, a thickness of an end that is of a product and that is easily made thin is reduced, so that product design and manufacturing feasibility is relatively high, and productivity is better.

In a process of folding the electronic device, the second flat part rotates along with the supporting member when driven by the supporting member, so that the bending part is bent and deformed, and the binding part between the second flat part and the bending part also approaches the second housing. Finally, when the electronic device is folded, the second flat part and a major portion of the bending part are accommodated in the second housing. Because a position of the supporting member in this case may fit a shape of the second housing, a position of the second flat part may also fit the shape of the second housing. Therefore, inner space of the second housing can be fully used to accommodate the second flat part. Therefore, the electronic device can further enable a position of the second flat part in the folded state to fit an appearance form of the second housing, so that the product has better designability and productivity.

In an implementation, the second housing includes a housing part and a cover plate, the housing part is connected between the hinge and the cover plate, the cover plate is fixedly connected to the housing part, and the body appearance surface includes a first body appearance surface of the housing part and a second body appearance surface of the cover plate. The second housing is divided into the housing part and the cover plate, so that a unique and original product appearance can be manufactured.

In an implementation, there is a step between the second body appearance surface and the first body appearance surface. The step is set, so that the thickness of the second housing can be further reduced, and the electronic device is lighter and thinner.

In an implementation, the electronic device includes a circuit board and a first functional component, the circuit board is electrically connected to the first functional component, both the circuit board and the first functional component are mounted in the first housing, and the first flat part covers the circuit board and the first functional component.

All electronic components may be arranged in the first housing. Therefore, a cable between the first functional component and the circuit board can be arranged only in the first housing, and does not need to pass through the first housing or the hinge to extend into the second housing. In this way, a disadvantage that it is difficult to seal and protect the cable when the cable passes through the housing and the hinge can be avoided, so that difficulty of sealing the entire machine is reduced.

In an implementation, a second functional component is integrated inside the second flat part, and the second functional component is electrically connected to the circuit board by using a cable of the flexible screen. Because there is no need to add a cable to the second functional component, component stack can be simplified, and assembly difficulty can be reduced. In addition, the second functional component can be better sealed by using packaging of the flexible screen, to avoid a sealing difficulty caused when the cable needs to pass through the first housing and be electrically connected to the circuit board after the cable is added to the second functional component. In addition, because the second functional component is disposed in a display area of the electronic device, a screen-to-body ratio of the electronic device can be improved.

### BRIEF DESCRIPTION OF DRAWINGS

To describe the technical solutions in embodiments of this application or in the background, the following describes accompanying drawings used in describing embodiments of this application or in the background.
FIG. 1 is a schematic diagram of a three-dimensional structure of an electronic device in a folded state according to a first implementation of this application;
FIG. 2 is a schematic diagram of an exploded structure of the electronic device in FIG. 1 in an unfolded state;
FIG. 3 is a schematic diagram of an exploded structure of a folding apparatus of the electronic device in FIG. 2;
FIG. 4 is a schematic diagram of a three-dimensional structure of a first housing of the folding apparatus in FIG. 3;
FIG. 5 is a schematic diagram of a three-dimensional structure of a second housing of the folding apparatus in FIG. 3;
FIG. 6 is a side view of the electronic device in FIG. 1 in an unfolded state;
FIG. 7 is a side view of the electronic device in FIG. 6 in a folded state;
FIG. 8 is a side view of an electronic device in a folded state in a manner in a first implementation;
FIG. 9 is a side view of an electronic device in a folded state in another manner in a first implementation;
FIG. 10 is a side view of an electronic device in a folded state in another manner in a first implementation;
FIG. 11 is a side view of an electronic device in a folded state in another manner in a first implementation;
FIG. 12 is a side view of an electronic device in a folded state in another manner in a first implementation;
FIG. 13 is a schematic diagram of an exploded structure of a second housing of the electronic device in FIG. 12;
FIG. 14 is a schematic diagram of a top-view structure of the second housing in FIG. 13;
FIG. 15 is a schematic diagram of another exploded structure of a second housing of the electronic device in FIG. 12;
FIG. 16 is a schematic diagram of a top-view structure of the second housing in FIG. 15;
FIG. 17 is a schematic diagram of an assembly structure of a hinge of the folding apparatus in FIG. 3;
FIG. 18 is a schematic diagram of an exploded structure of the hinge in FIG. 17;
FIG. 19 is a schematic diagram of a partially enlarged structure of a position A in FIG. 18;
FIG. 20 is a schematic diagram of another exploded structure of the hinge in FIG. 17;
FIG. 21 is a schematic diagram of a three-dimensional structure of a holder of the hinge in FIG. 20;
FIG. 22 is a schematic diagram of a partially enlarged structure of a position B in FIG. 21;
FIG. 23 is a schematic diagram of three-dimensional structures of a first rotating shaft and a second rotating shaft on the hinge in FIG. 20;
FIG. 24 is a schematic diagram of a three-dimensional structure of a first moving member on the hinge in FIG. 20;
FIG. 25 is a schematic diagram of a partially enlarged structure of a position C in FIG. 24;
FIG. 26 is a schematic diagram of a three-dimensional structure of a second moving member on the hinge in FIG. 20;
FIG. 27 is a schematic diagram of a three-dimensional structure of a third moving member on the hinge in FIG. 20;
FIG. 28 is a schematic diagram of a three-dimensional structure of a supporting member of the folding apparatus in FIG. 3;
FIG. 29 is a schematic diagram of a partially enlarged structure of a position D in FIG. 28;
FIG. 30 is a schematic diagram of a cross-sectional structure of the electronic device in FIG. 6;
FIG. 31 is a schematic diagram of a partially enlarged structure of a position E in FIG. 30;
FIG. 32 is a schematic diagram of a cross-sectional structure of the electronic device in FIG. 7;
FIG. 33 is a schematic diagram of a partially enlarged structure of a position F in FIG. 32;
FIG. 34a to FIG. 34c are skeletons of mechanism representing a relative kinematic relationship between a supporting member and a second housing in a first implementation;
FIG. 35 is a schematic diagram of a cross-sectional structure of a foldable electronic device in a folded state in a conventional technology;
FIG. 36 is a schematic diagram of a cross-sectional structure of an electronic device in a folded state in another manner in a first implementation;
FIG. 37 is a schematic diagram of a three-dimensional structure of a supporting member in a second implementation;
FIG. 38 is a schematic diagram of a partially enlarged structure of a position H in FIG. 37;
FIG. 39 is a schematic diagram of an assembly structure of a supporting member and a third moving member in a second implementation;
FIG. 40 is a schematic diagram of a partially enlarged structure of a position I in FIG. 39;
FIG. 41 is a schematic diagram of a partially enlarged structure of a position G in FIG. 37;
FIG. 42a to FIG. 42c are skeletons of mechanism representing a relative kinematic relationship between a supporting member and a second housing in a second implementation;
FIG. 43 is a schematic diagram of a three-dimensional structure of a supporting member in a third implementation;
FIG. 44 is a schematic diagram of a partially enlarged structure of a position J in FIG. 43;
FIG. 45 is a schematic diagram of an assembly structure of a supporting member, a second housing, and a holder in a third implementation;
FIG. 46 is a schematic diagram of a partially enlarged structure of a position K in FIG. 45;
FIG. 47a to FIG. 47c are skeletons of mechanism representing a relative kinematic relationship between a supporting member and a second housing in a third implementation;
FIG. 48 is a schematic diagram of an assembly structure of a supporting member, a second housing, and a holder in a fourth implementation;
FIG. 49 is a schematic diagram of a partially enlarged structure of a position M in FIG. 48;
FIG. 50 is a schematic diagram of a three-dimensional structure of a conversion bracket in a fourth implementation; and
FIG. 51 is a schematic diagram of a partial structure of a base that fits a conversion bracket through sliding in a fourth implementation.

### DESCRIPTION OF EMBODIMENTS

The following implementations of this application provide an electronic device. The electronic device is an electronic product with a flexible screen, and the electronic device includes but is not limited to a mobile phone, a tablet computer, an electronic reader, a vehicle-mounted device, and the like. The electronic device may be folded and unfolded. Specifically, the electronic device may include a bending part and flat parts connected to two opposite sides of the bending part. The bending part may be bent and deformed, so that the flat parts on the two sides of the bending part rotate towards or opposite to each other. When the flat parts on both sides of the bending part rotate toward each other to be stacked (being stacked means that the flat parts can be attached without a gap or are opposite to each other with a gap), the electronic device is in a folded state. Otherwise, when the flat parts on the two sides of the bending part rotate opposite to each other from a mutually stacked state to extreme positions (that is, when the flat parts can no longer rotate opposite to each other), the electronic device is in an unfolded state. In the unfolded state, the flat parts on the two sides of the bending part may be completely unfolded or may be unfolded to form a bending angle or radian.

In this embodiment, the electronic device may be folded into "two layers". To be specific, the electronic device includes one bending part and two flat parts, and the two flat parts may rotate towards each other to be mutually stacked, so that the electronic device is in a two-layer form. For the electronic device that may be folded into "two layers", "unfolded" means that the two flat parts are completely unfolded or are unfolded to form a bending angle or radian. The electronic device may also be folded into "a plurality of layers"; in other words, the electronic device includes at least two bending parts and at least three flat parts, every two adjacent flat parts are connected by one bending part, and every two adjacent flat parts can rotate toward each other to be stacked, so that the electronic device is in a form of at least two layers (for example, the electronic device includes two bending parts and three flat parts, and after folding, two flat parts on two sides are stacked on a middle flat part side by side, and in this case, the electronic device is in a form of two layers; or after folding, a first flat part in two flat parts on two sides is stacked on a middle flat part, and a second flat part is stacked on the first flat part, and in this case, the electronic device is in a form of three layers.). For the electronic device that may be folded into "a plurality of layers", "unfolded" may be implemented provided that two of the at least three flat parts are completely unfolded or are unfolded to form a bending angle or radian. The following uses an example in which the electronic device may be folded into "two layers" for description.

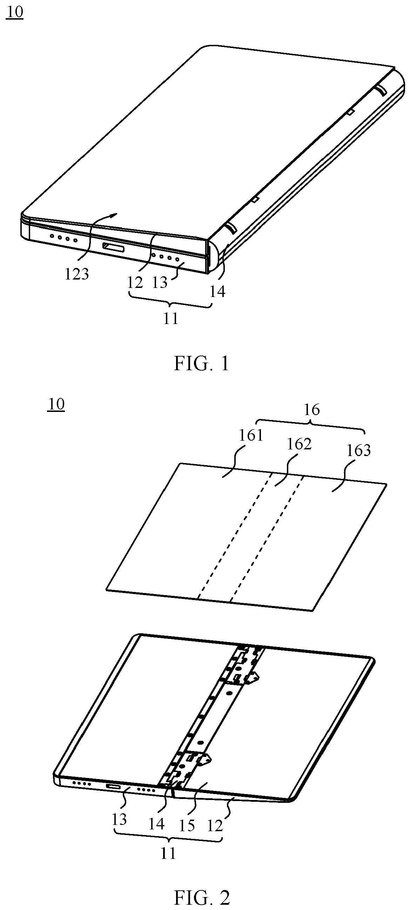

As shown in FIG. 1 and FIG. 2, in a first implementation, an electronic device 10 may include a folding apparatus 11 and a flexible screen 16. The folding apparatus 11 is configured to bear and drive the flexible screen 16. The folding apparatus 11 can be folded and unfolded, to drive the flexible screen 16 to be bent or unfolded.

The flexible screen 16 includes but is not limited to a flexible organic light-emitting diode (Organic Light-Emitting Diode, OLED for short) screen. As shown in FIG. 2, the flexible screen 16 includes a first flat part 161, a bending part 162, and a second flat part 163. The bending part 162 is connected between the first flat part 161 and the second flat part 163. The first flat part 161 and the second flat part 163 are basically not deformed in a bending or unfolding process of the flexible screen 16. The second flat part 163 may rotate relative to the first flat part 161, so that the bending part 162 is deformed.

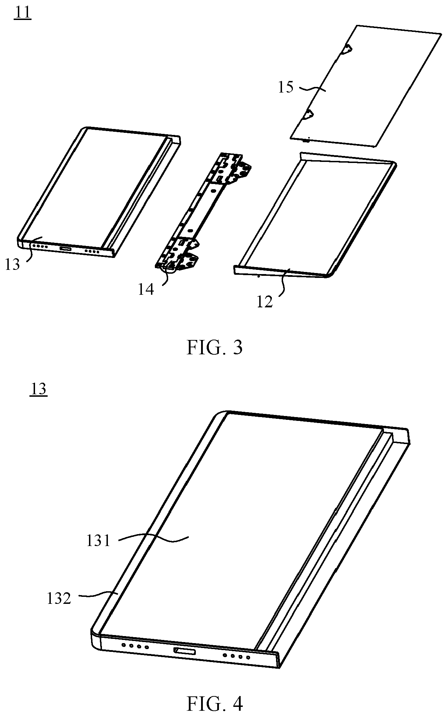

As shown in FIG. 2 and FIG. 3, the folding apparatus 11 includes a hinge 14, a first housing 13, a second housing 12, and a supporting member 15. The first housing 13 and the second housing 12 are rotatably connected by the hinge 14, the hinge 14 may be a mechanism including several parts, and the hinge 14 can generate mechanical motion, so that the first housing 13 and the second housing 12 can rotate relative to each other. When the second housing 12 rotates toward the first housing 13 and is attached to the first housing 13, the folding apparatus 11 is in a folded state; in other words, the electronic device 10 is in a folded state. When the second housing 12 rotates away from the first housing 13 to an extreme position, the folding apparatus 11 is in an unfolded state; in other words, the electronic device 10 is in an unfolded state. When the folding apparatus 11 is in the folded state, the flexible screen 16 is bent and accommodated inside the folding apparatus 11; in other words, the electronic device 10 is an electronic device with an inward folding screen.

As shown in FIG. 1, when the folding apparatus 11 is folded, the first housing 13 is located at a lower part, and the second housing 12 is located at an upper part. This is merely an example. Actually, alternatively, the first housing 13 is located at an upper part, and the second housing 12 is located at a lower part. For example, when the folding apparatus 11 is folded, the first housing 13 and the second housing 12 may be basically attached to each other without a gap, and when the folding apparatus 11 is unfolded (in other words, when the folding apparatus 11 is in the unfolded state; the same below), the first housing 13 and the second housing 12 may be flattened.

As shown in FIG. 2, the first flat part 161 of the flexible screen 16 is fastened on the first housing 13. For example, in a manner, as shown in FIG. 4, the first housing 13 may have a first mounting slot 131, the first flat part 161 is mounted in the first mounting slot 131, and a slot wall of the first mounting slot 131 can limit and protect the first flat part 161. A first top surface 132 of the slot wall of the first mounting slot 131 (the first top surface 132 is a surface that is of the first housing 13 and that faces the second housing 12 when the folding apparatus 11 is folded, and the first top surface 132 surrounds a periphery of the first flat part 161) may be a plane, and a display surface (a surface facing a user and displaying a picture) of the first flat part 161 may be basically flush with the first top surface 132, for example, the display surface may be coplanar with the first top surface 132 or be recessed by a relatively small size. Alternatively, in another manner, the first mounting slot 131 may not be disposed on the first housing 13, the first flat part 161 is directly laid on a first mounting surface on the first housing 13, and a wall surrounding the first flat part 161 is not disposed on a periphery of the first mounting surface.

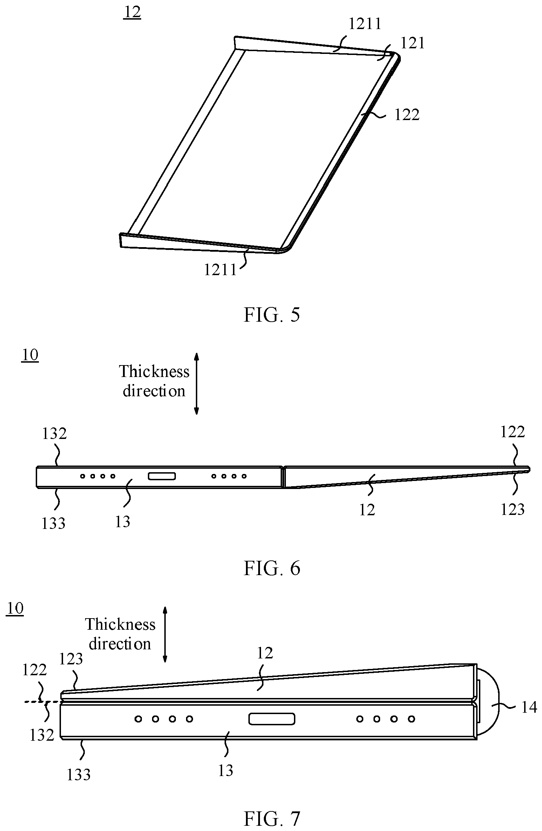

As shown in FIG. 2 and FIG. 3, the supporting member 15 is accommodated in the second housing 12. For example, in a manner, as shown in FIG. 5, the second housing 12 may have a second mounting slot 121, and the second mounting slot 121 is configured to accommodate the supporting member 15. A slot wall of the second mounting slot 121 has a second top surface 122, the second top surface 122 surrounds a periphery of the supporting member 15, and the second top surface 122 may be a plane.

When the second housing 12 approaches the first housing 13, the second top surface 122 and the first top surface 132 may be basically attached to each other. Alternatively, in a solution in which the first housing 13 has a first mounting surface, the second top surface 122 may be basically attached to a peripheral area of the first mounting surface, and the peripheral area does not cover the first flat part 161.

In the first implementation, when the electronic device 10 is placed on a horizontal plane and the first housing 13 is in contact with the horizontal plane, the display surface of the first flat part 161 on the first housing 13 may be parallel to the horizontal plane in unfolded and folded states. A normal direction of the display surface of the first flat part 161 may be used as a thickness direction, and a thickness of the first housing 13, a thickness of the second housing 12, and a thickness of the electronic device 10 during folding may be separately determined by using two surfaces at two opposite ends of the thickness direction as thickness references.

Specifically, as shown in FIG. 6 and FIG. 7, in a manner, the first housing 13 may further have a back surface 133, and the first top surface 132 and the back surface 133 are separately located at two opposite ends in the thickness direction. The back surface 133 is an outer surface of a side that is of the first housing 13 and that is away from the first flat part 161. For example, when the first housing 13 is placed on the horizontal plane and the first flat part 161 is kept parallel to the horizontal plane, the back surface 133 is in contact with the horizontal plane. The back side 133 may be a plane or include a planar area and a curved area. In the thickness direction, a distance from a specific position on the first top surface 132 to a corresponding position on the back surface 133 may be referred to as a thickness of the first housing 13 at this position. For a case in which the back surface 133 is a plane, positions of the first housing 13 may have basically consistent thicknesses from an end close to the hinge 14 to an end away from the hinge 14 (in other words, when the electronic device 10 is placed on the horizontal plane, the back surface 133 is basically attached to the horizontal plane). Alternatively, in a case in which the back surface 133 includes a planar area and a curved area, parts corresponding to the planar area on the first housing 13 have basically consistent thicknesses (in other words, when the electronic device 10 is placed on the horizontal plane, the planar area is basically attached to the horizontal plane). Each of two opposite sides of the planar area may be connected to one curved area, and the two curved areas may be basically symmetrically distributed on the two opposite sides of the planar area, so that a thickness of a specific position at an end that is of the first housing 13 and that is close to the hinge 14 and a thickness of a symmetrical position at an end away from the hinge 14 are basically consistent. Certainly, only one side of the planar area may be connected to the curved area, and a part that is of the first housing 13 and that is corresponding to the curved area has a variable thickness.

In another manner, in a solution in which the first mounting slot 131 is not disposed on the first housing 13 and the first flat part 161 is directly laid on the first mounting surface of the first housing 13, a distance from a specific position on the first mounting surface to a corresponding position on the back surface 133 in the thickness direction may be referred to as a thickness of the first housing 13 at this position. In the first implementation, except that one thickness reference of the first housing 13 is the first mounting surface, another factor affecting the thickness is the same as that described in the foregoing implementation, and details are not described herein again.

As shown in FIG. 1, FIG. 6, and FIG. 7, in a manner, the second housing 12 further has a body appearance surface 123, and the body appearance surface 123 and the second top surface 122 are separately located at two opposite ends in the thickness direction. The body appearance surface 123 is an outer surface on a side that is of the second housing 12 and that is away from the first housing 13 when the electronic device 10 is folded. When the electronic device 10 is folded, the body appearance surface 123 is opposite to the first flat part 161. When the electronic device 10 is folded and placed on a table surface, and the back surface 133 of the first housing faces downward and is contact with the table surface, the body appearance surface 123 faces upward. The body appearance surface 123 may be a plane. In the thickness direction, a distance from a specific position on the second top surface 122 to a corresponding position on the body appearance surface 123 may be referred to as a thickness of the second housing 12 at this position. In the first implementation, a thickness of the end that is of the second housing 12 and that is close to the hinge 14 is greater than a thickness of the end that is of the second housing 12 and that is away from the hinge 14, and a thickness of each position on the second housing 12 may continuously and smoothly change gradually from the end close to the hinge 14 to the end away from the hinge 14. A thickness changing rate of the second housing 12 may be basically constant. If coordinates of each position on the second housing 12 and a corresponding thickness are used as variables to construct a thickness curve, the thickness curve is basically an oblique straight line.

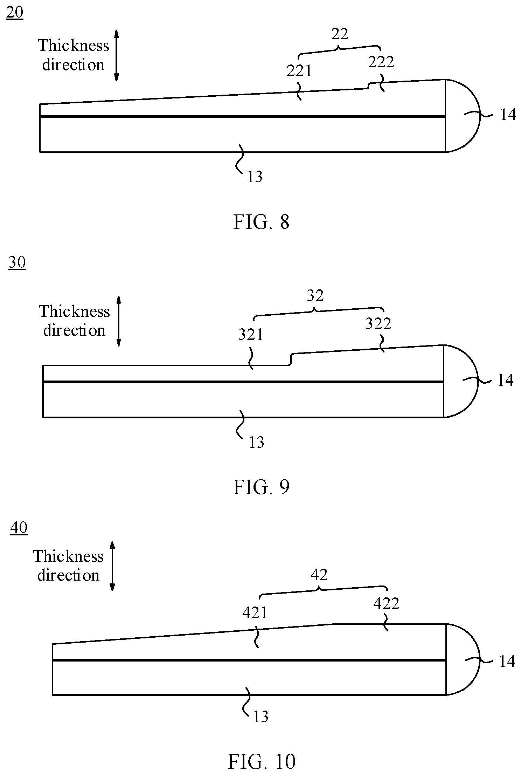

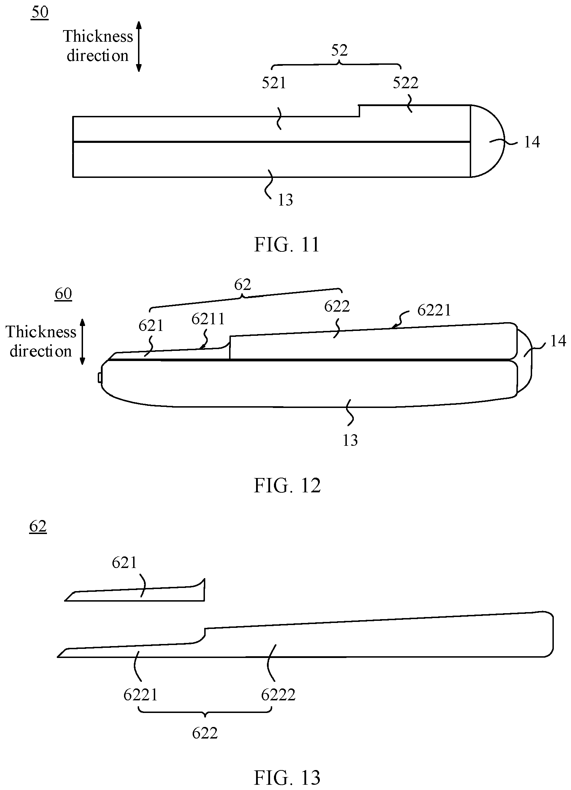

In another implementation, the thickness of the second housing 12 may abruptly change, and the thickness curve of the second housing 12 may be a non-straight line. As shown in FIG. 8, in a manner, a second housing 22 of an electronic device 20 includes a first part 221 and a second part 222. Both thicknesses of the first part 221 and the second part 222 are in a gradual changing form. A thickness at a junction of the first part 221 and the second part 222 abruptly changes, and a thickness changing rate basically remains unchanged. Alternatively, as shown in FIG. 9, in another manner, a second housing 32 of an electronic device 30 includes a first part 321 and a second part 322, a thickness of the first part 321 is basically constant, and a thickness of the second part 322 is in a gradual changing form. Both a thickness of a junction of the first part 321 and the second part 322 and a thickness changing rate abruptly change (thickness changing rates of the first part 321 and the second part 322 are respectively zero and non-zero). Alternatively, as shown in FIG. 10, in another manner, a second housing 42 of an electronic device 40 includes a first part 421 and a second part 422, a thickness of the first part 421 is in a gradual changing form, and a thickness of the second part 422 is basically constant. A thickness changing rate at a junction of the first part 421 and the second part 422 abruptly changes (thickness changing rates of the first part 421 and the second part 422 are respectively non-zero and zero). Alternatively, as shown in FIG. 11, in another manner, a second housing 52 of an electronic device 50 includes a first part 521 and a second part 522. Both thicknesses of the first part 521 and the second part 522 may be basically consistent, and a thickness of a junction of the first part 521 and the second part 522 abruptly changes.

In the first implementation, the second housing may be further set to a structure with two parts with a step, so that the second housing is further made thinner.

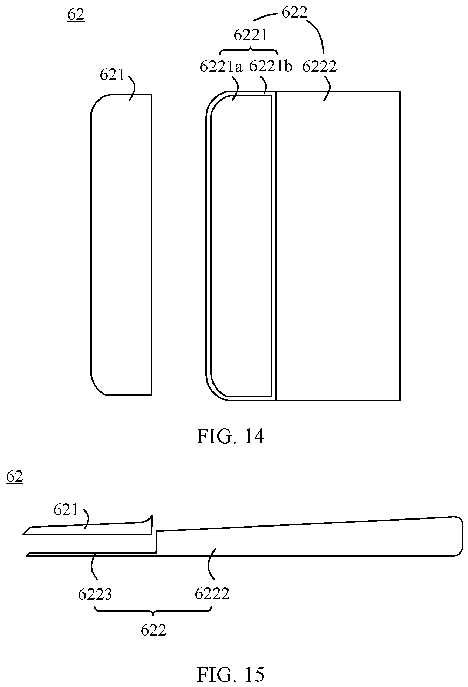

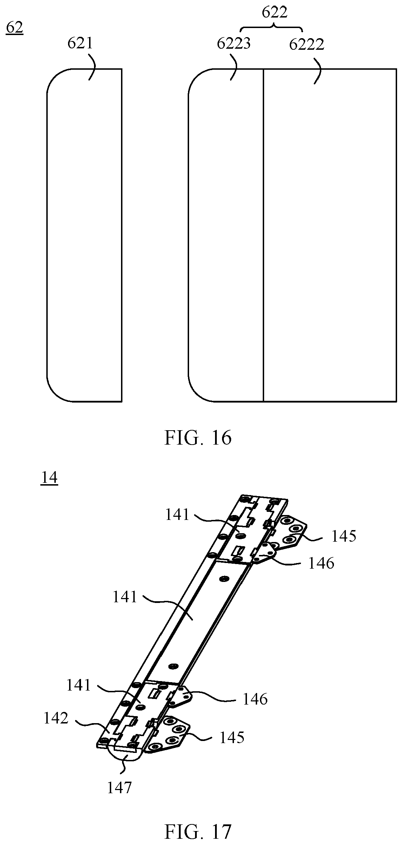

Specifically, as shown in FIG. 12 and FIG. 13, in this implementation, a second housing 62 of an electronic device 60 may include a housing part 622 and a cover plate 621 that are connected. For example, in a manner, as shown in FIG. 13 and FIG. 14, the housing part 622 may include a body structure 6222 and a frame structure 6221, and there is a step between the body structure 6222 and the frame structure 6221. The frame structure 6221 may include a bottom wall 6221a and a frame 6221b surrounding a periphery of the bottom wall 6221a, and one side of the frame 6221b is connected to the body structure 6222. The bottom wall 6221a may be partially hollowed out or not hollowed out. The cover plate 621 is mounted on the bottom wall 6221a, and the frame 6221b surrounds an outer periphery of the cover plate 621. Alternatively, in another manner, the frame structure may not include the bottom wall, but is surrounded by a plurality of frames connected head to end. The cover plate 621 is "inlaid" in the frame structure, and a frame of the frame structure surrounds the outer periphery of the cover plate 621. Alternatively, in another manner, as shown in FIG. 15 and FIG. 16, the housing part 622 may include a body structure 6222 and a bearing platform 6223, and there is a step between the body structure 6222 and the bearing platform 6223. One side of the bearing platform 6223 is connected to the body structure 6222, and the cover plate 621 is mounted on the bearing platform 6223. Certainly, the housing part 622 and the cover plate 621 may alternatively be connected in another manner.

As shown in FIG. 12, one end of the housing part 622 is connected to the hinge 14. The housing part 622 can be folded or unfolded relative to the first housing 13 by using the hinge 14. The cover plate 621 is fixedly connected to an end that is of the housing part 622 and that is away from the hinge 14, and the cover plate 621 may move along with the housing part 622. A thickness of an end that is of the cover plate 621 and that is away from the housing part 622 may be less than a thickness of an end that is of the cover plate 621 and that is adjacent to the housing part 622. Thicknesses of two ends of the cover plate 621 may continuously and smoothly change gradually, and may be consistent with a thickness changing rate of the housing part 622 (similar to FIG. 5). Alternatively, thickness of positions on the cover plate 621 may also be basically consistent (similar to FIG. 8). An end that is of the cover plate 621 and that is away from the housing part 622 may be basically flush with the first housing 13.

As shown in FIG. 12, a body appearance surface of the second housing 62 includes a second body appearance surface 6211 of the cover plate 621 and a first body appearance surface 6221 of the housing part 622. Definitions of the second body appearance surface 6211 and the first body appearance surface 6221 are similar to those described above and are not repeated herein.

As shown in FIG. 12, a step is formed between the second body appearance surface 6211 and the first body appearance surface 6221; in other words, the cover plate 621 may be recessed in a direction in which the housing part 622 approaches the first housing 13. Therefore, the second housing 62 is divided into two parts with different thicknesses, and the recessed cover plate 621 may make the end of the second housing 62 thinner, so that the second housing 62 is made lighter and thinner visually.

In another implementation, the second housing 62 does not need to have such a step structure, and there is no step between the second body appearance surface 6211 and the first body appearance surface 6221. In this solution, a novel product appearance can be made by disposing the separated second housing 62. Alternatively, the second housing is integrated and does not include the cover plate.

For the electronic device, a thickness of the electronic device in the folded state is described in the first implementation. For example, as shown in FIG. 7, when the electronic device 10 is folded, the body appearance surface 123 and the back surface 133 are separately located at two opposite ends in the thickness direction. In the thickness direction, a distance from a specific position on the body appearance surface 123 to a corresponding position on the back surface 133 may be referred to as a thickness of the electronic device 10 at this position. Consistent with the second housing 12, a thickness of an end that is of the electronic device 10 and that is close to the hinge 14 is greater than a thickness of an end that is of the electronic device 10 and that is away from the hinge 14. Thicknesses of positions on the electronic device 10 may continuously and smoothly change gradually or change abruptly from the end away from the hinge 14 to the end close to the hinge 14. Meanings of "gradually changed continuously and smoothly" and "abruptly changed" are the same as above, and details are not repeated herein.

In the first implementation, a thickness of at least a part of the first housing is basically constant. A thicker end of the second housing corresponds to a thicker end of the electronic device (a thinner end of the second housing corresponds to a thinner end of the electronic device, and a thick-thick and thin-thin correspondence is formed between the second housing and the electronic device). Therefore, appearance consistency of the electronic device is relatively good, and appearance experience is better.

The maximum thickness of the electronic device is limited by a relatively thick part in an entire machine, such as, a camera module or the hinge. It is relatively difficult to make the relatively thick part thin, and an end that is of a conventional electronic device and that is close to the hinge in a folded state and a thickness of an end away from the hinge are basically consistent. Consequently, an overall thickness of the conventional electronic device is relatively large. In the first implementation, the thickness of the end that is of the electronic device and that is close to the hinge during folding is relatively large, and the thickness of this end may be basically the same as that of the conventional electronic device. The thickness of the end that is of the electronic device and that is away from the hinge 14 during folding is reduced (for example, the thickness may be reduced by setting a thinner part or fewer parts). Compared with the conventional electronic device, the electronic device seems thinner visually, and is lighter, and holding feeling of the user is also better. Particularly, when the thickness of the electronic device 10 continuously and smoothly changes gradually, a line of the entire machine is relatively smooth, and appearance experience is improved. In addition, in the solution in the first implementation, a thickness of an end that is of a product and that is easily made thin is reduced, so that product design and manufacturing feasibility is relatively high, and productivity is better.

Specific implementations of this application continue to be described below by using the electronic device 10 as an example.

As shown in FIG. 17 to FIG. 20, in the first implementation, the hinge 14 may include a holder 147, a first rotating shaft 143, a second rotating shaft 144, a first moving member 142, a second moving member 145, a third moving member 146, and a cover member 141.

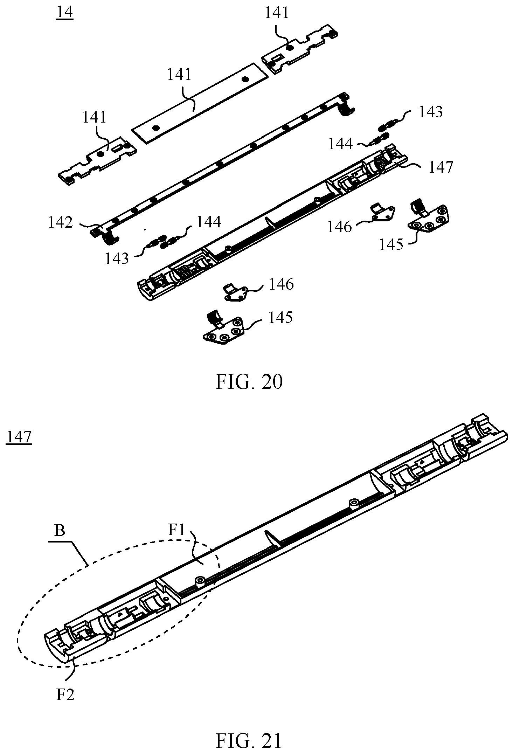

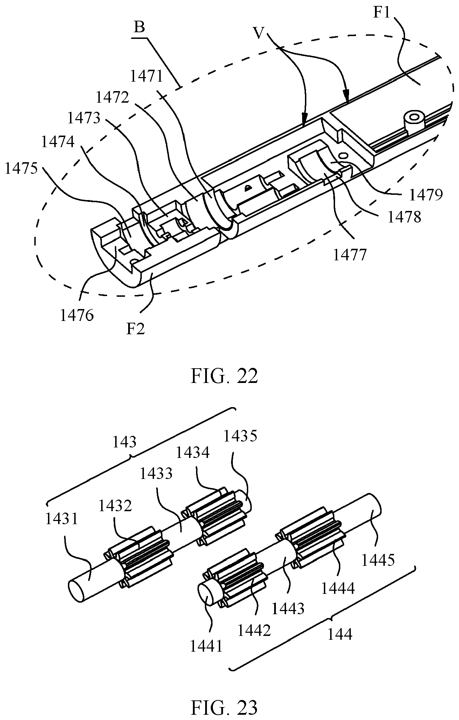

As shown in FIG. 21 and FIG. 22, the holder 147 may include an outer surface F2 and an inner surface that are disposed opposite to each other. The outer surface F2 may be approximately U-shaped or C-shaped. When the electronic device 10 is folded, the outer surface F2 may be used as an appearance surface of the electronic device 10. A plurality of accommodating cavities such as an accommodating cavity 1472 and an accommodating cavity 1475 are formed on the inner surface, and a plurality of bases such as a base 1473, a base 1476, and a base 1478 are further formed on the inner surface. The accommodating cavity is recessed relative to the base in a direction toward the outer surface F2, and the base is protruded relative to the accommodating cavity in a direction away from the outer surface F2. A fitting slot may be formed on a surface that is of the base and that is away from a cavity wall of the accommodating cavity. The inner surface forms a holder inner cavity F1, the holder inner cavity F1 has an opening V, and the first rotating shaft 143, the second rotating shaft 144, the first moving member 142, the second moving member 145, and the third moving member 146 can be inserted into the holder inner cavity F1 through the opening V In another implementation, a specific structure of the holder 147 may be designed based on a requirement, and is not limited to the foregoing description.

In the first implementation, the first rotating shaft 143 is used as a rotating shaft of the first housing 13. As shown in FIG. 23, the first rotating shaft 143 may be a gear shaft, and the first rotating shaft 143 includes a first shaft 1431, a first gear 1432, a second shaft 1433, a second gear 1434, and a third shaft 1435 that are sequentially connected. As shown in FIG. 22 and FIG. 23, the first shaft 1431 is supported in a fitting slot of the base 1476, the first gear 1432 is accommodated in the accommodating cavity 1475, the second gear 1434 is accommodated in a fitting slot of the base 1473, and the third shaft 1435 is supported in the fitting slot of the base 1473. The first gear 1432 meshes with the first moving member 142, so that the first moving member 142 rotates around the first shaft 1431. The second gear 1434 meshes with the second rotating shaft 144 (which is further described below). In another implementation, the first rotating shaft may include only one gear meshing with the first moving member 142, and the first rotating shaft does not fit the second rotating shaft 144. Alternatively, the first rotating shaft may not be limited to the gear shaft, the first rotating shaft fits the first moving member 142, and the first rotating shaft fits or does not fit the second rotating shaft 144.

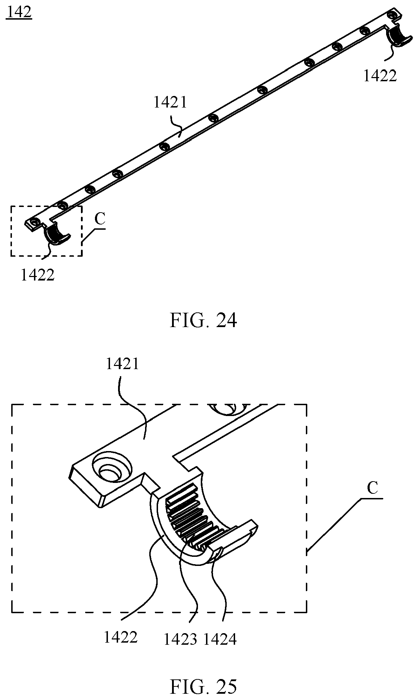

As shown in FIG. 24 and FIG. 25, one end of the first moving member 142 may be a strip plate 1421, and the strip plate 1421 is fixedly connected to the first housing 13. The other end of the first moving member 142 may be an arc-shaped plate 1422 (an arc in this application means a circular arc shape; the same below) and has an internal tooth 1423. The arc-shaped plate 1422 and the first gear 1432 of the first rotating shaft 143 are located in a same accommodating cavity 1475, and the internal tooth 1423 meshes with the first gear 1432. Through mesh movement, the first moving member 142 can rotate around the first shaft 1431, so that the first housing 13 can rotate around the first shaft 1431.

To enable the first moving member 142 to stably mesh with the first gear 1432 of the first rotating shaft 143, the first moving member 142 may be limited in the accommodating cavity 1475, and the accommodating cavity 1475 guides the first moving member 142. For example, as shown in FIG. 22, an arc-shaped guide rail 1474 may be formed on the inner surface of the accommodating cavity 1475, the arc-shaped guide rail 1474 has an arc-shaped surface that fits the first moving member 142, and the arc-shaped guide rail 1474 may surround the first shaft 1431. There is at least one arc-shaped guide rail 1474. When there are at least two arc-shaped guide rails 1474, the at least two arc-shaped guide rails 1474 may be distributed at intervals along the first shaft 1431. Accordingly, as shown in FIG. 25, an arc-shaped guide rail 1424 may be formed on a surface (a surface that is of the first moving member 142 and that is away from the internal tooth 1423) that is of the first moving member 142 and that fits the accommodating cavity 1475, and the arc-shaped guide rail 1424 fits the arc-shaped guide rail 1474. Therefore, the first moving member 142 can slide inside the accommodating cavity 1475, and meshes with the first gear 1432 of the first rotating shaft 143. In another implementation, a structure of the first moving member is not limited to the foregoing description, provided that the first moving member can rotate around the first shaft and the first housing 13 can rotate. For example, when the first rotating shaft includes only a shaft and no gear is disposed, an end that is of the first moving member and that fits the first rotating shaft may be a sleeve, and the sleeve may be rotatably sleeved on an outer peripheral surface of the first rotating shaft.

The second rotating shaft 144 is used as a rotating shaft of the second housing 12. As shown in FIG. 23, the second rotating shaft 144 and the first rotating shaft 143 may have a same structure, and may be arranged in parallel at staggered positions in an axial direction. A third gear 1442 of the second rotating shaft 144 and a second gear 1434 of the first rotating shaft 143 are located in a fitting slot of the same base 1473, and the third gear 1442 meshes with the second gear 1434, so that torque transmission between the two rotating shafts is implemented. A fourth gear 1444 of the second rotating shaft 144 is accommodated in the accommodating cavity 1472 and meshes with the second moving member 145 (which is further described below). In another implementation, the second rotating shaft may include only one gear meshing with the second moving member 145, and the second rotating shaft does not fit the first rotating shaft 143, and there is no torque transmission between the second rotating shaft and the first rotating shaft 143. Alternatively, the second rotating shaft may not be limited to the gear shaft, the second rotating shaft fits the second moving member 145, and the second rotating shaft fits or does not fit the first rotating shaft 143.

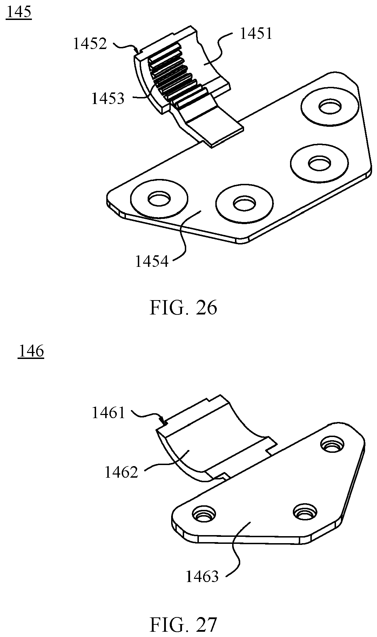

As shown in FIG. 26, one end of the second moving member 145 may be a flat plate 1454, and is fixedly connected to the second housing 12. The other end of the second moving member 145 may be an arc-shaped plate 1451 and have an internal tooth 1453, the arc-shaped plate 1451 and the fourth gear 1444 of the second rotating shaft 144 are located in a same accommodating cavity 1472, and the internal tooth 1453 meshes with the fourth gear 1444. The flat plate 1454 that is of the second moving member 145 and that is connected to the second housing 12 and the strip plate 1421 that is of the first moving member 142 and that is connected to the first housing 13 are separately located on two sides of the second rotating shaft 144 (or the first rotating shaft 143). Through mesh movement, the second moving member 145 can rotate around the second rotating shaft 144, so that the second housing 12 can rotate around the second rotating shaft 144.

To enable the second moving member 145 to stably mesh with the fourth gear 1444 of the second rotating shaft 144, the second moving member 145 may be limited in the accommodating cavity 1472, and the accommodating cavity 1472 guides the second moving member 145. For example, an arc-shaped guide rail 1471 may be formed on the inner surface of the accommodating cavity 1472, the arc-shaped guide rail 1471 has an arc-shaped surface that fits the second moving member 145, and the arc-shaped guide rail 1471 may surround a rotation axis of the second rotating shaft 144. There is at least one arc-shaped guide rail 1471. When there are at least two arc-shaped guide rails 1471, the at least two arc-shaped guide rails 1471 may be distributed at intervals along the rotation axis of the second rotating shaft 144. Accordingly, an arc-shaped guide rail 1452 may be formed on a surface (a surface that is of the second moving member 145 and that is away from the internal tooth 1453) that is of the second moving member 145 and that fits the accommodating cavity 1472, and the arc-shaped guide rail 1452 fits the arc-shaped guide rail 1471. Therefore, the second moving member 145 can slide inside the accommodating cavity 1472, and meshes with the fourth gear 1444 of the second rotating shaft 144. In another implementation, a structure of the second moving member is not limited to the foregoing description, provided that the second moving member can rotate around the second rotating shaft 144 and the second housing 12 can rotate. For example, when the second rotating shaft includes only a shaft, one end that is of the second moving member and that fits the second rotating shaft may be a sleeve, the sleeve may be rotatably sleeved on an outer peripheral surface of the second rotating shaft, and the other end of the second moving member is fixedly connected to the second housing 12.

As shown in FIG. 27, one end of the third moving member 146 may be a flat plate 1463 and is fixedly connected to the supporting member 15 (which is further described below). The other end of the third moving member 146 may be an arc-shaped plate 1462, and forms sliding fitting together with an arc-shaped fitting slot 1477 (which may be referred to as an arc-shaped sliding slot 1477, where a center line of the arc-shaped sliding slot 1477 is parallel to a rotation axis of the first rotating shaft 143 and a rotation axis of the second rotating shaft 144, and the center line of the arc-shaped sliding slot 1477 is not collinear with the rotation axis of the second rotating shaft 144) in the base 1478. Through sliding fitting, the third moving member 146 can rotate relative to the base 1478, and a rotation axis of the third moving member 146 is parallel to a rotation axis of the first moving member 142 and a rotation axis of the second moving member 145, and the rotation axis of the third moving member 146 is the center line of the arc-shaped sliding slot 1477. Therefore, the supporting member 15 fixedly connected to the third moving member 146 can rotate relative to the base 1478, and a rotation axis of the supporting member 15 is the center line of the arc-shaped sliding slot 1477 (a kinematic design of the supporting member 15 is described below).

To guide and limit the third moving member 146 to enable the third moving member 146 to stably slide in the arc-shaped sliding slot 1477, as shown in FIG. 22, an arc-shaped guide rail 1479 may be formed on an inner surface of the arc-shaped sliding slot 1477, the arc-shaped guide rail 1479 has an arc-shaped surface that fits the third moving member 146, and the arc-shaped guide rail 1479 may surround the rotation axis of the third moving member 146. There is at least one arc-shaped guide rail 1479. When there are at least two arc-shaped guide rails 1479, the at least two arc-shaped guide rails 1479 may be distributed at intervals along the rotation axis of the third moving member 146. Accordingly, an arc-shaped guide rail 1461 may be formed on a surface on which the third moving member 146 fits the arc-shaped sliding slot 1477, and the arc-shaped guide rail 1461 fits the arc-shaped guide rail 1479. In another implementation, a structure of the third moving member is not limited to this, provided that the third moving member can rotate relative to the base 1478.

As shown in FIG. 20, in the first implementation, to ensure stable rotation of the folding apparatus 11, there may be several (for example, two) first rotating shafts 143 and several (for example, two) second rotating shafts 144. The several first rotating shafts 143 are collinearly distributed at intervals, the several second rotating shafts 144 are collinearly distributed at intervals, and one first rotating shaft 143 correspondingly fits one second rotating shaft 144.

Accordingly, as shown in FIG. 20, there may also be several (for example, two) second moving members 145. The several second moving members 145 are collinearly distributed at intervals, and one second moving member 145 correspondingly fits one second rotating shaft 144. In another implementation, the second moving member may alternatively be in an integral structure in which the second moving member fits several second rotating shafts 144, the second moving member includes a strip end, the end extends from one side of the second housing 12 to the other side, and the end is connected to several (for example, two) arc-shaped plates with an internal tooth. The several arc-shaped plates are distributed at intervals, and an internal tooth of one arc-shaped plate meshes with a fourth gear 1444 of one second rotating shaft 144.

As shown in FIG. 24, to simplify assembly and reduce an assembly error, the strip plate 1421 of the first moving member 142 may be arranged to extend from one side of the first housing 13 to the other side. The strip plate 1421 is connected to several (for example, two) arc-shaped plates 1422 with an internal tooth 1423. The several arc-shaped plates 1422 are distributed at intervals, and an internal tooth 1423 of one arc-shaped plate 1422 meshes with a first gear 1432 of one first rotating shaft 143; in other words, the first moving member 142 is in an integral structure in which the first moving member 142 fits several first rotating shafts 143. In another implementation, there may be several (for example, two) first moving members that are distributed at intervals, each first moving member includes a strip plate and an arc-shaped plate that are connected, and one first moving member correspondingly fits one first rotating shaft.

As shown in FIG. 20, there may be several (for example, two) third moving members 146. The several third moving members 146 are distributed at intervals, and one third moving member 146 correspondingly fits an arc-shaped sliding slot 1477 of one base 1478. In another implementation, the third moving member may alternatively be in an integral structure in which the third moving member fits arc-shaped sliding slots 1477 of several bases 1478, the third moving member includes an end in a strip plate shape, the end extends from one side of the supporting member 15 to the other side, and the end is connected to several (for example, two) arc-shaped plates. The several arc-shaped plates are distributed at intervals, and one arc-shaped plate fits one arc-shaped sliding slot.

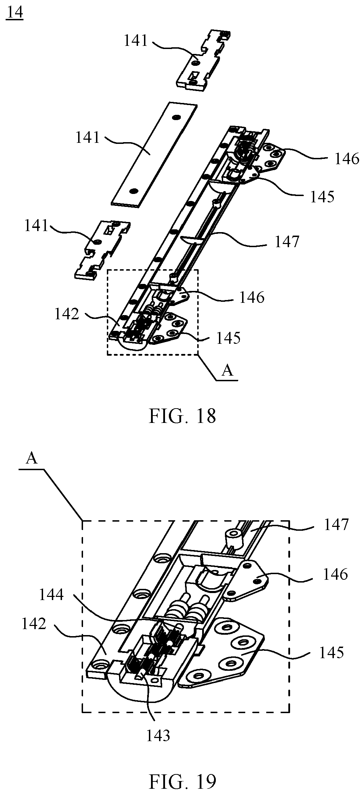

As shown in FIG. 18 and FIG. 21, the cover member 141 covers the opening of the inner cavity F1 of the holder, to package the first rotating shaft 143, the first moving member 142, the second rotating shaft 144, the second moving member 145, and the third moving member 146 in the inner cavity F1 of the holder, so that a structure of the hinge 14 is complete and compact, and structural strength of the hinge 14 is increased. The cover member 141 corresponds to a position of the bending part 162 of the flexible screen 16, and the cover member 141 can further separate the bending part 162 from the foregoing components installed in the holder 147, to avoid mutual interference between the bending part 162 and the components.

In the first implementation, when the first moving member 142 and the first gear 1432 of the first rotating shaft 143 perform mesh movement, the second gear 1434 of the first rotating shaft 143 and the third gear 1442 of the second rotating shaft 144 perform mesh movement, and the fourth gear 1444 of the second rotating shaft 144 and the second moving member 145 further perform mesh movement, so that the first moving member 142 and the second moving member 145 synchronously rotate in opposite directions, and the second housing 12 and the first housing 13 can also synchronously rotate in opposite directions. Such a synchronous rotation design can accelerate folding and unfolding speeds of the folding apparatus 11, so that the user can quickly fold and unfold the electronic device 10, and waiting time is reduced. In addition, when the user exerts force on the first housing 13 or the second housing 12 to unfold or fold the electronic device 10, in the synchronous rotation design, the user only needs to perform an operation on either side of the first housing 13 and the second housing 12, and does not need to perform an operation on both sides of the first housing 13 and the second housing 12, so that the operation can be simplified, and user experience can be improved.

In the first implementation, as shown in FIG. 1 to FIG. 3, the supporting member 15 is disposed on an inner side of the second housing 12 (a side that is of the second housing 12 and that faces the first housing 13 when the folding apparatus 11 is folded) and is opposite to the body appearance surface 123 of the second housing 12. When the folding apparatus 11 is folded, the supporting member 15 is concealed between the first housing 13 and the second housing 12, and is accommodated in the second mounting slot 121 of the second housing 12. The supporting member 15 may be approximately plate-shaped, and a surface that is of the supporting member 15 and that is away from the body appearance surface 123 is used to fasten the second flat part 163 of the flexible screen 16.

In another implementation, the supporting member may have another structure that matches the second flat part 163, and the another structure is capable of fastening and bearing the second flat part 163. For example, the electronic device includes several strip-shaped supporting members, the several supporting members are distributed at intervals, each supporting member fastens a part of the second flat part 163, and the several supporting members jointly bear the second flat part 163.

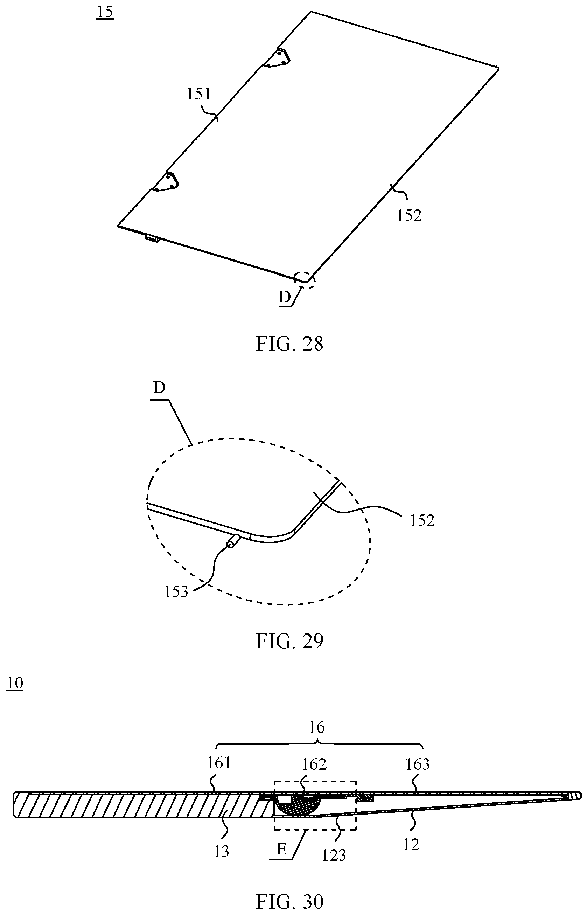

As shown in FIG. 28, the supporting member 15 has a first end 151 (an end near the hinge 14) and a second end 152 (an end away from the hinge 14) opposite to the first end 151. The first end 151 is spaced apart from the second housing 12 and is fixedly connected to the end that is of the third moving member 146 and that is the flat plate 1463. The supporting member 15 can rotate relative to the base 1478 by using the third moving member 146, and the rotation axis of the supporting member 15 is the center line of the arc-shaped sliding slot 1477 of the base 1478. The second end 152 and the end that is of the second housing 12 and that is away from the hinge 14 form a rotational and sliding connection. For example, as shown in FIG. 5, a guide rail may be formed on an inner side wall 1211 of the second mounting slot 121 of the second housing 12. With reference to FIG. 28 and FIG. 29, a guide post 153 may be protruded at a position that is at the second end 152 and that corresponds to the inner side wall 1211, and the guide post 153 is limited in the guide rail, and may slide and rotate relative to the guide rail. To ensure stable fitting, guide rails may be disposed on both two opposite sides of the second mounting slot 121, guide posts 153 may be disposed on both two opposite sides of the second end 152, and one guide post 153 correspondingly fits one guide rail. In another implementation, positions of the guide rail and the guide post may be interchanged; in other words, the guide rail is disposed at the second end 152, and the guide post is protruded on the inner side wall of the second mounting slot 121. Alternatively, another structure may be used to implement the sliding and rotational connection based on a requirement, for example, a fitting structure between a guide post and a guide rail is used.

According to the invention, because the second end 152 of the supporting member 15 is constrained to the end that is of the second housing 12 and that is away from the hinge 14, the first end 151 of the supporting member 15 can rotate relative to the hinge 14, and in a process in which the second housing 12 approaches the first housing 13, the second housing 12 may apply torque to the supporting member 15 from the second end 152 of the supporting member 15, so that the first end 151 of the supporting member 15 drives the third moving member 146 to slide in the arc-shaped sliding slot 1477, and the supporting member 15 rotates around the base 1478. While the supporting member 15 rotates, the guide post 153 at the second end 152 slides and rotates relative to the guide rail. In a process in which the second housing 12 rotates from a flat position to a specified position (not reaching a folded position), the guide post 153 moves relative to the guide rail in a direction away from the hinge 14. In a process in which the second housing 12 rotates from the specified position to the folded position, the guide post 153 moves relative to the guide rail in a direction toward the hinge 14. In other words, the guide post 153 can perform reciprocating motion.

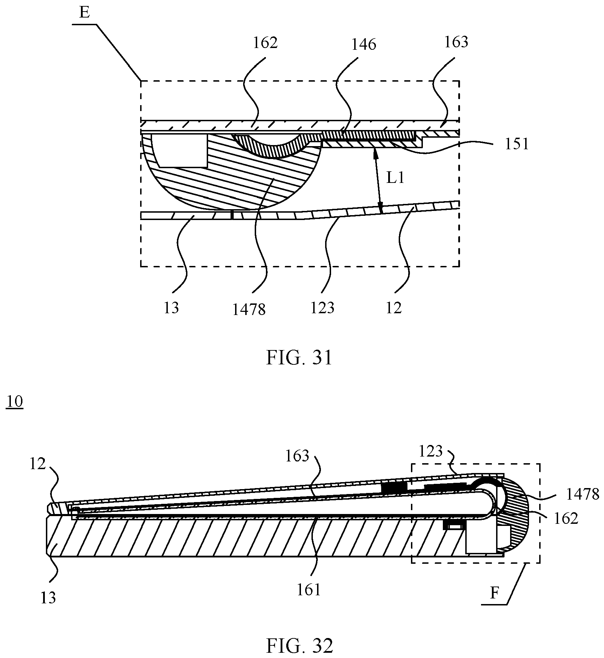

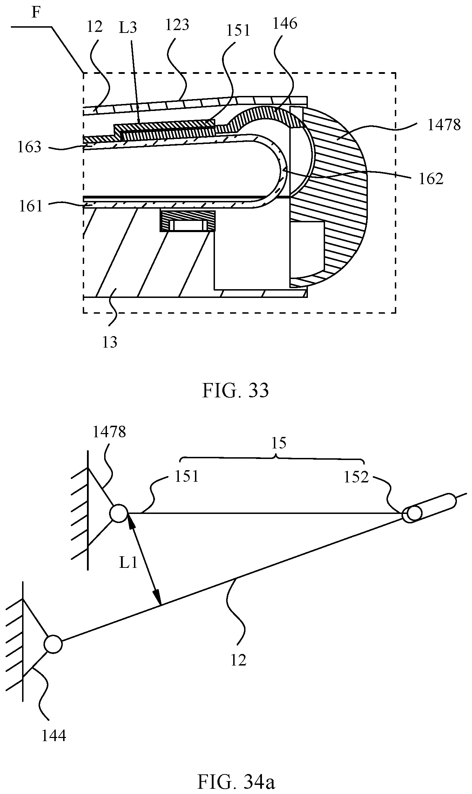

With reference to FIG. 30 and FIG. 31, the second housing 12 and the first housing 13 are flattened, a distance from the first end 151 of the supporting member 15 to the body appearance surface 123 of the second housing 12 is L1. Because the first end 151 can rotate relative to the hinge 14, the second end 152 and the second housing 12 form a sliding and rotational connection, and in a process in which the second housing 12 approaches the first housing 13, the first end 151 gradually approaches the body appearance surface 123. With reference to FIG. 32 and FIG. 33, finally when the second housing 12 and the first housing 13 are entirely brought together, a distance between the first end 151 and the body appearance surface 123 is L3, where L3 is a minimum distance between the first end 151 and the body appearance surface 123. In this case, a position of the supporting member 15 may adapt to a shape of the second housing 12, for example, the supporting member 15 may be basically parallel to the second housing 12.

On the contrary, in a process in which the second housing 12 rotates away from the first housing 13, the second housing 12 may apply reverse torque to the supporting member 15 from the second end 152 of the supporting member 15, so that the first end 151 of the supporting member 15 drives the third moving member 146 to slide in a reverse direction in the arc-shaped sliding slot, and the supporting member 15 rotates relative to the base in a reverse direction. While the supporting member 15 rotates in the reverse direction, the guide post 153 at the second end 152 slides and rotates relative to the guide rail. The guide post 153 can also perform reciprocating motion. In a process in which the second housing 12 rotates from a folded position to a specified position (not reaching a flat position), the guide post 153 moves relative to the guide rail in a direction away from the hinge 14. In a process in which the second housing 12 rotates from the specified position to the flat position, the guide post 153 moves relative to the guide rail in a direction toward the hinge 14. In a process in which the second housing 12 rotates away from the first housing 13, the first end 151 gradually moves away from the second housing 12. Finally, when the second housing 12 and the first housing 13 are entirely flattened, a distance between the first end 151 and the second housing 12 is maximum. In this case, the supporting member 15 and the first housing 13 may be basically coplanar.

A relative kinematic relationship between the second housing 12 and the supporting member 15 in the first implementation is described more intuitively below with reference to a skeleton of mechanism.

FIG. 34a to FIG. 34c are skeletons of mechanism that are obtained, based on an expression manner of a skeleton of mechanism in the mechanical field, by representing three components, namely, the second housing 12, the supporting member 15, and the third moving member 146, by lines (the supporting member 15 and the third moving member 146 are fixedly connected, and may be considered as one component, and therefore are indicated by a same line), representing the second rotating shaft 144 and the base 1478 by rack symbols, and representing a connection relationship between the second housing 12 and the second rotating shaft 144, a connection relationship between the supporting member 15 and the base 1478, and a connection relationship between the second housing 12 and the supporting member 15 by motion sub-symbols. An end that is of the second housing 12 and that is close to the second rotating shaft 144 rotates around the second rotating shaft 144, and the end of the second housing 12 and the second rotating shaft 144 form a revolute joint. An end that is of the second housing 12 and that is away from the second rotating shaft 144 and the second end 152 of the supporting member 15 slide relative to each other and also rotate relative to each other, to form a composite kinematic pair with a sliding joint and a revolute joint. The first end 151 of the supporting member 15 equivalently rotates around the center line of the arc-shaped sliding slot 1477 of the base 1478, and therefore, the first end 151 and the base 1478 may equivalently form a revolute joint.

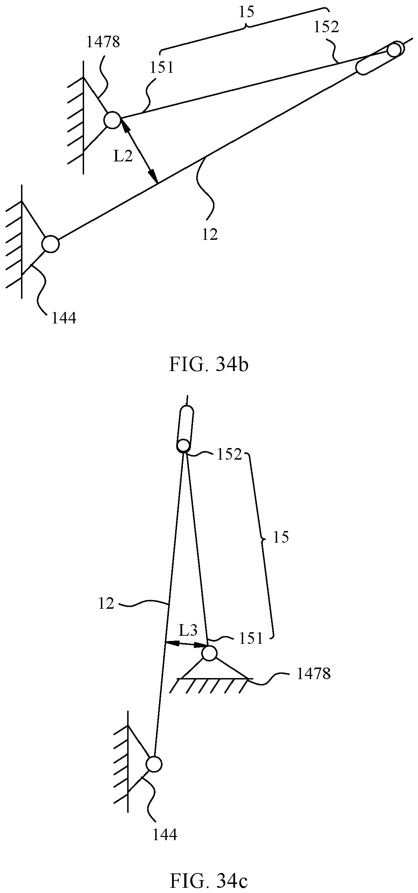

FIG. 34a to FIG. 34c may reflect a change of the distance from the first end 151 of the supporting member 15 to the body appearance surface 123 in the process in which the second housing 12 approaches the first housing 13. FIG. 34a shows that when the second housing 12 is at a flat position, the distance from the first end 151 to the body appearance surface 123 is L1. FIG. 34b shows that when the second housing 12 is at a specified position (not reaching a folded position), the distance from the first end 151 to the body appearance surface 123 is L2. FIG. 34c shows that when the second housing 12 is at the folded position, the distance from the first end 151 to the body appearance surface 123 is L3. It can be learned from FIG. 34a to FIG. 34c that L1 to L3 gradually decrease; in other words, the first end 151 of the supporting member 15 gradually approaches the second housing 12.

In another implementation, in the process in which the second housing 12 approaches the first housing 13, the distance from the first end 151 to the body appearance surface 123 may not sequentially decrease, but the distance reciprocates when the supporting member 15 is at a specific position, for example, a distance at a subsequent position is greater than or equal to a distance at a previous position. However, the distance is generally in a decreasing trend.

On the contrary, FIG. 34c to FIG. 34a reflect a change of the distance from the first end 151 of the supporting member 15 to the body appearance surface 123 in the process in which the second housing 12 and the first housing 13 are separated from each other. It is easily learned that L3 to L1 sequentially increase; in other words, the first end 151 of the supporting member 15 gradually moves away from the second housing 12.

In another implementation, in the process in which the second housing 12 and the first housing 13 are separated from each other, the distance from the first end 151 to the body appearance surface 123 may not sequentially increase, but the distance reciprocates when the supporting member 15 is at a specific position, for example, a distance at a subsequent position is less than or equal to a distance at a previous position. However, the distance is generally in an increasing trend.

With reference to FIG. 30 to FIG. 33, in the folding process of the folding apparatus 11, when driven by the supporting member 15, the second flat part 163 rotates with the supporting member 15, so that the bending part 162 is gradually bent and deformed, and a binding part of the second flat part 163 and the bending part 162 also gradually approaches the body appearance surface 123. Finally, when the folding apparatus 11 is folded, the second flat part 163 and a major portion of the bending part 162 are accommodated in the second housing 12 (in other words, at least a major portion of the flexible screen 16 is accommodated in the second housing 12). In this case, a position of the supporting member 15 may adapt to the shape of the second housing 12, and therefore, a position of the second flat part 163 may also adapt to the shape of the second housing 12. Accordingly, the first flat part 161 and a remaining portion of the bending part 162 connected to the first flat part 161 are accommodated in the first housing 13. Certainly, a corresponding structural design (for example, a maximum movement distance of the first end 151 of the supporting member 15 relative to the second housing 12 is properly designed) may be used, so that the second flat part 163 and the entire bending part 162 are accommodated in the second housing 12, and only the first flat part 161 is accommodated in the first housing 13.

On the contrary, in the unfolding process of the folding apparatus 11, when driven by the supporting member 15, the second flat part 163 rotates with the supporting member 15, so that the bending part 162 is gradually unfolded, and a binding part of the second flat part 163 and the bending part 162 also gradually moves away from the body appearance surface 123. Finally, when the folding apparatus 11 is unfolded, the supporting member 15 may be basically coplanar with the first housing 13, so that the second flat part 163 and the first flat part 161 may be basically coplanar to facilitate viewing of the user.

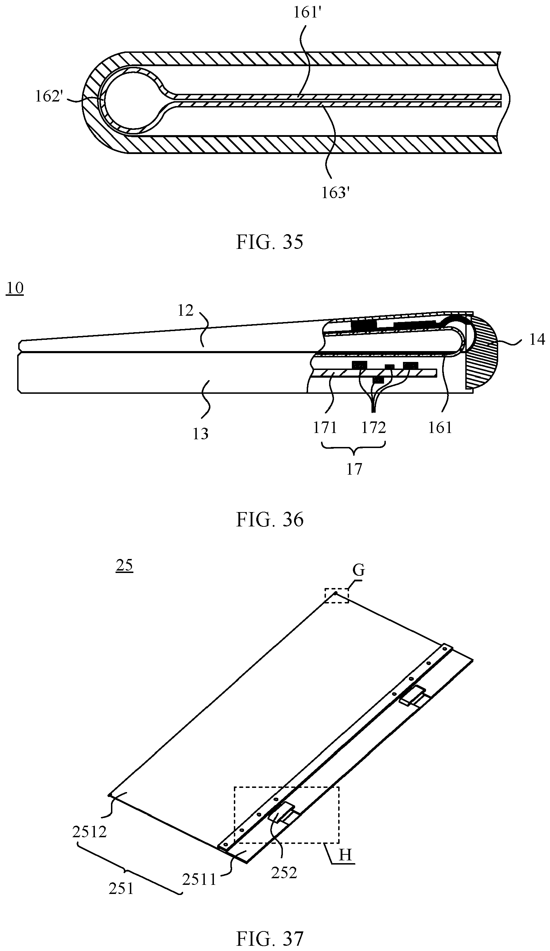

According to the folding apparatus 11 in the first implementation, the supporting member 15 that can move relative to the second housing 12 is disposed, so that the first end 151 of the supporting member 15 gradually approaches the body appearance surface 123 in the folding process, and the binding part of the second flat part 163 and the bending part 162 can be gradually pulled into the second housing 12, and finally the second flat part 163 can be arranged at a position that adapts to the shape of the second housing 12. In this way, internal space of the second housing 12 is fully used to accommodate the second flat part 163. Therefore, the folding apparatus 11 can not only reduce a thickness of the electronic device 10 in the folded state, but also enable a position of the second flat part 163 in the folded state to match an appearance form of the second housing 12, so that the product has good designability and productivity. In addition, in the folding process, the supporting member 15 pulls the binding part of the second flat part 163 and the bending part 162 in a direction away from the first flat part 161, so that when the flexible screen 16 is in the folded state, transition between the second flat part 163 and the bending part 162 is as smooth as possible (for example, basically tangential), and transition between the first flat part 161 and the bending part 162 is as smooth as possible (for example, basically tangential). Therefore, bending of the flexible screen 16 can be reduced, and damage caused by excessive bending of the flexible screen 16 can be avoided. In this way, reliability of the flexible screen 16 is improved, and a service life of the flexible screen 16 is prolonged. On the contrary, as shown in FIG. 35, the supporting member 15 in the first implementation is not disposed for a conventional foldable electronic device. In a folding process, a second flat part 163' and a first flat part 161' of a flexible screen approach each other and are finally basically attached to each other. Consequently, a curvature change from a bending part 162' to the first flat part 161' and a curvature change from the bending part 162' to the second flat part 163' are relatively large, and the flexible screen is easily excessively bent and damaged.

In the first implementation, the flexible screen 16 can be located at a neutral layer position of the folding apparatus 11 by properly designing a structural dimension of a corresponding part in the folding apparatus 11. In a bending process, the flexible screen 16 located at the neutral layer position can keep a length basically unchanged, and stress is extremely small. This can ensure that the flexible screen 16 has a definite track in a bending process, and greatly reduces damage caused by bending.

In the first implementation, because the thickness of the second housing 12 is reduced, inner space of the first housing 13 is more sufficient than that of the second housing 12, and all electronic components canbe disposed in the first housing 13.

As shown in FIG. 36, the electronic device 10 may include an electronic component 17, the electronic component 17 may include a circuit board 171 and a first functional component 172, and the first functional component 172 is electrically connected to the circuit board 171. The first functional component includes but is not limited to at least one of a chip, a connector, a sensor, a switch, a camera module, a flashlight, a breathing light, an earpiece, a speaker, a motor, a battery, and the like. The electronic device 17 is mounted in the first housing 13, and the first flat part 161 covers the electronic component 17.

Because the electronic component is disposed only in the first housing 13, a cable between the first functional component and the circuit board 171 may be disposed only in the first housing 13, and does not need to pass through the first housing 13 or pass through the hinge 14 to extend into the second housing 12. Because there is rotational fitting between the housing and the hinge 14, it is generally very difficult to seal the housing and the hinge 14, and if a cable passes through the housing and the hinge 14, it is impossible to well seal and protect the cable. However, in the solution in the first implementation, the cable is arranged in the first housing 13, so that the cable can be well sealed and protected provided that the first housing 13 is sealed (it is relatively easy to seal the first housing 13). This avoids a disadvantage that it is difficult to seal and protect the cable when the cable passes between the housing and the hinge 14, and sealing difficulty of the entire machine is reduced. In another implementation, the electronic component may be disposed in both the first housing 13 and the second housing 12. The electronic component in the second housing 12 may be at least one of the circuit board and the functional component.

In the first implementation, a second functional component such as a fingerprint sensor or a light sensor may also be integrated into the second flat part 163. The second functional component may be electrically connected to the circuit board 171 in the first housing 13 by using a cable of the flexible screen 16, and no additional cable needs to be added. In this way, component stack can be simplified, and assembly difficulty can be reduced. In addition, the second functional component can be better sealed by using packaging of the flexible screen 16, to avoid a sealing difficulty caused when the cable needs to pass through the first housing 13 and be electrically connected to the circuit board after the cable is added to the second functional component. In addition, because the second functional component is disposed in a display area of the electronic device 10, and there is no need to reserve a position in a non-display area of the electronic device 10 for the second functional component, the non-display area may be reduced, so that a screen-to-body ratio of the electronic device 10 is improved. In another implementation, the second functional component in the second flat part 163 may be electrically connected to the circuit board in the second housing 12 by using the cable of the flexible screen 16, or the second functional component may not be integrated in the second flat part 163.

In a second implementation, different from the first implementation, the first end of the supporting member is slidably connected to the flat plate-shaped end of the third moving member, and the second end of the supporting member is rotatably connected to the end that is of the second housing 12 and that is away from the hinge 14.

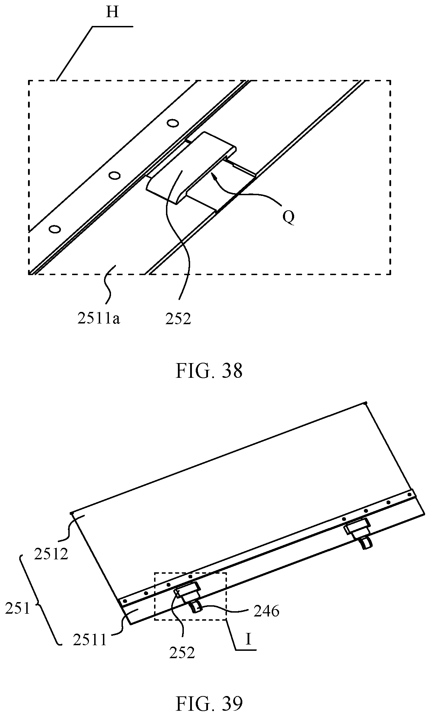

As shown in FIG. 37 and FIG. 38, in the second implementation, a supporting member 25 may include a first bearing part 251 and a first fitting part 252. The first bearing part 251 may be approximately plate -shaped, and a surface that is of the first bearing part 251 and that is away from the second housing 12 is used to fasten the second flat part 163 of the flexible screen 16, a first end 2511 is an end that is of the first bearing part 251 and that is close to the third moving member, and a second end 2512 is an end that is of the first bearing part 251 and that is away from the hinge 14. The first fitting part 252 is disposed on a surface (which may be referred to as a base surface 2511a) that is of the first end 2511 of the first bearing part 251 and that faces the second housing 12, and the first fitting part 252 may be, for example, a plate-shaped structure. Both two opposite ends of the plate-shaped structure are connected to the base surface 2511a, and a sliding cavity Q is formed between the plate-shaped structure and the base surface 2511a. The sliding cavity Q has two opposite openings.

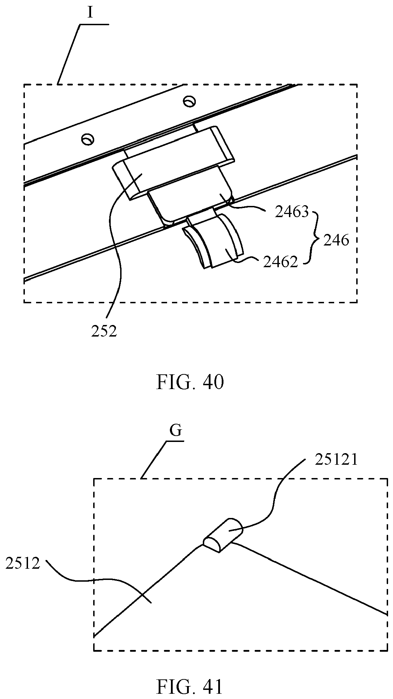

As shown in FIG. 39 and FIG. 40, one end of a third moving member 246 may be a flat plate 2463, and the other end may be an arc-shaped plate 2462. The flat plate 2463 is inserted into the sliding cavity Q through one opening and fits a cavity wall of the sliding cavity Q through sliding. In another implementation, the sliding cavity Q may alternatively have only one opening, and the sliding cavity Q is a groove. Alternatively, the supporting member may have another structure that fits the third moving member 246 through sliding. For example, a fitting slot may be disposed on a side surface (a direction of the side surface is perpendicular to a thickness direction of the first bearing part) of the first end of the first bearing part. The flat plate 2463 at one end of the third moving member 246 is inserted into the fitting slot and forms sliding fitting with the fitting slot.

With reference to FIG. 5, FIG. 37, and FIG. 41, in the second implementation, a blind hole may be disposed on the inner side wall 1211 of the second mounting slot 121 of the second housing 12, and a rotation pin 25121 may be protruded at a position that is at the second end 2512 and that corresponds to the inner side wall 1211. The rotation pin 25121 is inserted into the blind hole and forms rotational fitting with the blind hole. To ensure stable fitting, the blind hole may be disposed on both two opposite sides of the second mounting slot 121, the rotation pin 25121 may be disposed on both two opposite sides of the second end 2512, and one rotation pin 25121 correspondingly fits one blind hole. Certainly, positions of the blind hole and the rotation pin 25121 may be interchanged; in other words, the blind hole is disposed at the second end 2512, and the rotation pin 25121 is protruded on the side wall of the second mounting slot 121. In another implementation, another structure may be used based on a requirement to achieve the rotational fitting.

In the second implementation, the second housing 12 may apply torque to the first bearing part 251 from the second end 2512 of the first bearing part 251 in the process in which the second housing 12 approaches the first housing 13, so that the first end 2511 of the first bearing part 251 drives the third moving member 246 to slide in the arc-shaped sliding slot 1477, and the first bearing part 251 rotates relative to the base 1478. While the third moving member 246 and the first bearing part 251 rotate, the third moving member 246 also slides relative to the first fitting part 252. In a process in which the second housing 12 rotates from a flat position to a specified position (not reaching a folded position), the third moving member 246 slides relative to the first fitting part 252 in a direction away from the holder 147. In a process in which the second housing 12 rotates from the specified position to the folded position, the third moving member 246 slides relative to the first fitting part 252 in a direction toward the holder 147. In other words, the third moving member 246 can perform reciprocating motion.

Because the first end 2511 of the first bearing part 251 can rotate relative to the hinge 14 and be slidably connected to the third moving member 246, the second end 2512 and the second housing 12 are rotatably connected. In a process in which the second housing 12 approaches the first housing 13, the first end 2511 gradually approaches the body appearance surface 123. Finally, when the second housing 12 and the first housing 13 are entirely attached to each other, a distance between the first end 2511 and the body appearance surface 123 is minimum. In this case, a position of the first bearing part 251 may adapt to the shape of the second housing 12, for example, the first bearing part 251 may be basically parallel to the second housing 12.

On the contrary, in a process in which the second housing 12 rotates away from the first housing 13, the second housing 12 may apply reverse torque to the supporting member 25 from the second end 2512 of the first bearing part 251, so that the first end 2511 of the first bearing part 251 drives the third moving member 246 to slide in a reverse direction in the arc-shaped sliding slot 1477, and the first bearing part 251 rotates relative to the base 1478 in a reverse direction. When the first bearing part 251 rotates in the reverse direction, the third moving member 246 also slides relative to the first fitting part 252. The third moving member 246 may also perform reciprocating motion relative to the first fitting part 252. In a process in which the second housing 12 rotates from a folded position to a specified position (not reaching a flat position), the third moving member 246 slides relative to the first fitting part 252 in a direction away from the holder 147. In a process in which the second housing 12 rotates from the specified position to the flat position, the third moving member 246 slides relative to the first fitting part 252 in a direction toward the holder 147. In a process in which the second housing 12 rotates away from the first housing 13, the first end 2511 gradually moves away from the second housing 12. Finally, when the second housing 12 and the first housing 13 are entirely flattened, a distance between the first end 2511 and the second housing 12 is maximum. In this case, the first bearing part 251 and the first housing 13 may be basically coplanar.

A relative kinematic relationship between the second housing 12 and the supporting member 25 in the second implementation is described more intuitively below with reference to a simplified diagram of mechanical motion.

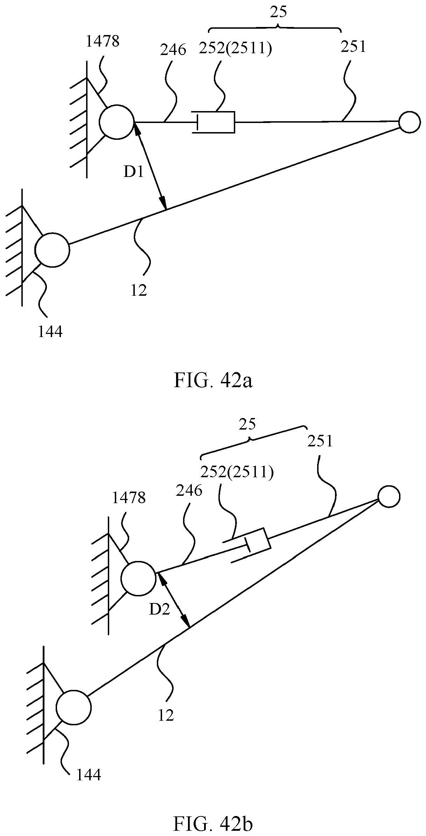

Similar to the first implementation, FIG. 42a to FIG. 42c are skeletons of mechanism that are obtained, based on an expression manner of a skeleton of mechanism in the mechanical field, by representing three components, namely, the second housing 12, the supporting member 25, and the third moving member 246, by lines, representing the second rotating shaft 144 and the base 1478 by rack symbols, and representing a connection relationship between the second housing 12 and the second rotating shaft 144, a connection relationship between the second housing 12 and the supporting member 25, a connection relationship between the supporting member 25 and the third moving member 246, and a connection relationship between the third moving member 246 and the base 1478 by motion sub-symbols. An end that is of the second housing 12 and that is close to the second rotating shaft 144 rotates around the second rotating shaft 144, and the end of the second housing 12 and the second rotating shaft 144 form a revolute joint. An end that is of the second housing 12 and that is away from the second rotating shaft 144 and the second end 2512 of the supporting member 25 form a revolute joint, and the first end 2511 of the supporting member 25 and an end that is of the third moving member 246 and that is away from the base 1478 form a sliding joint. An end that is of the third moving member 246 and that is close to the base 1478 equivalently rotates around a center line of the arc-shaped sliding slot 1477 of the base 1478. Therefore, the end that is of the third moving member 246 and that is close to the base 1478 and the base 1478 may equivalently form a revolute joint.

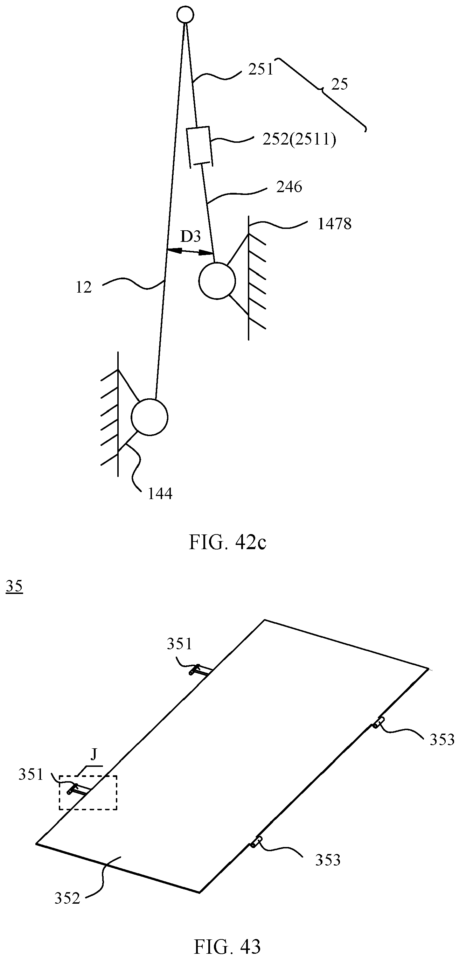

FIG. 42a to FIG. 42c reflect a change of the distance from the first end 2511 of the supporting member 25 to the body appearance surface 123 in the process in which the second housing 12 approaches the first housing 13. FIG. 42a shows that when the second housing 12 is at a flat position, the distance from the first end 2511 to the body appearance surface 123 is D1. FIG. 42b shows that when the second housing 12 is at a specified position (not reaching a folded position), the distance from the first end 2511 to the body appearance surface 123 is D2. FIG. 42c shows that when the second housing 12 is at the folded position, the distance from the first end 2511 to the body appearance surface 123 is D3. It can be learned from FIG. 42a to FIG. 42c that D1 to D3 sequentially decrease; in other words, the first end 2511 gradually approaches the body appearance surface 123.

In another implementation, in the process in which the second housing 12 approaches the first housing 13, the distance from the first end 2511 of the supporting member 25 to the body appearance surface 123 may not sequentially decrease, but the distance reciprocates when the supporting member 25 is at a specific position, for example, a distance at a subsequent position is greater than or equal to a distance at a previous position. However, the distance is generally in a decreasing trend.

On the contrary, FIG. 42c to FIG. 42a reflect a change of the distance from the first end 2511 to the body appearance surface 123 in the process in which the second housing 12 and the first housing 13 are separated from each other. It is easily learned that D3 to D1 sequentially increase; in other words, the first end 2511 of the supporting member 25 gradually moves away from the second housing 12.

In another implementation, in the process in which the second housing 12 approaches the first housing 13, the distance from the first end 2511 of the supporting member 25 to the body appearance surface 123 may not sequentially increase, but the distance reciprocates when the supporting member 25 is at a specific position, for example, a distance at a subsequent position is less than or equal to a distance at a previous position. However, the distance is generally in an increasing trend.

In the second implementation, a thickness of the electronic device 10 during folding can also be reduced, so that a position of the second flat part 163 in the folded state can match an appearance form of the second housing 12, and the product has better designability and productivity. Therefore, bending of the flexible screen 16 can be reduced, and damage caused by excessive bending of the flexible screen 16 can be avoided. In this way, it is convenient to place all electronic components in the first housing 13, and difficulty for sealing and protecting the entire machine is reduced. A derivation process of the foregoing technical effect is the same as corresponding description in the first implementation, and details are not described herein again.

In a third implementation, different from the second implementation, the third moving member 246 is not disposed on the folding apparatus 11, the first end of the supporting member directly slides in the arc-shaped sliding slot of the base, the supporting member rotates relative to the base, but a rotation axis of the supporting member is located at the second end, and does not overlap the center line of the arc-shaped sliding slot.

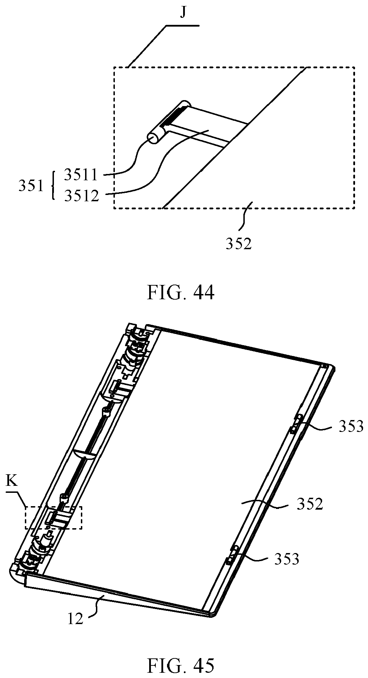

As shown in FIG. 43 and FIG. 44, in the third implementation, a supporting member 35 may include a second fitting part 351, a second bearing part 352, and a rotation part 353. The second bearing part 352 is connected between the second fitting part 351 and the rotation part 353.

The second bearing part 352 may be basically plate-shaped, and a surface that is of the second bearing part 352 and that is away from the second housing 12 is used to fasten the second flat part 163 of the flexible screen 16. The second fitting part 351 may be connected to a side that is of the second bearing part 352 and that is close to the hinge 14. The second fitting part 351 may include a connection part 3512 and a fitting post 3511. The connection part 3512 is connected between the fitting post 3511 and the second bearing part 352, and is located on a surface that is of the second bearing part 352 and that faces the second housing 12. The connection part 3512 may be plate-shaped or strip-shaped. The connection part 3512 may extend to the rotation part 353, so that the connection part 3512 may be used as a reinforcing rib formed on the surface that is of the second bearing part 352 and that faces the second housing 12, and play a role of increasing structural strength of the second bearing part 352. This is conducive to reliable bearing of the second flat part 163. Certainly, this is not indispensable. The fitting post 3511 may be cylindrical, and the fitting post 3511 may be used as a first end of the supporting member 35.

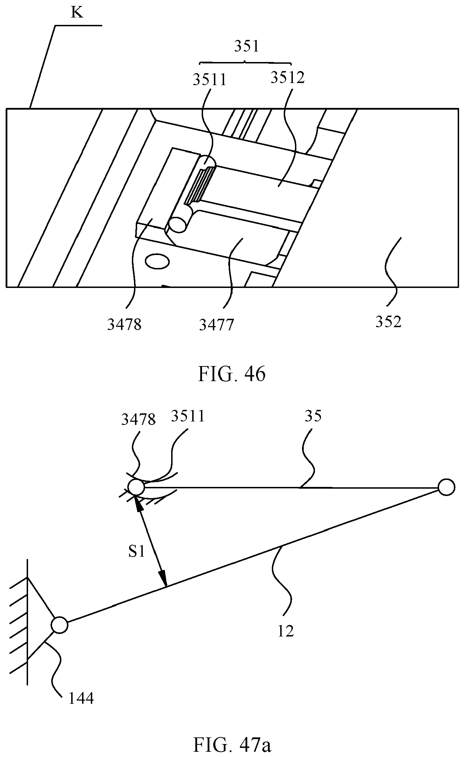

As shown in FIG. 45 and FIG. 46, the fitting post 3511 and the arc-shaped sliding slot 3477 of the base 3478 form sliding fitting. A center line of the arc-shaped sliding slot 3477 is parallel to a rotation axis of the first rotating shaft 143 and a rotation axis of the second rotating shaft 144, and the center line of the arc-shaped sliding slot 3477 is not collinear with the rotation axis of the second rotating shaft 144. The rotation part 353 may be used as a second end of the supporting member 35, and the rotation part 353 is rotatably connected to the end that is of the second housing 12 and that is away from the hinge 14. For example, the rotation part 353 may be a hinged shaft, and a hinged seat is formed at a position that is on the second housing 12 and that corresponds to the hinged shaft. The hinged shaft is inserted into the hinged seat to form rotational fitting.

To ensure stable fitting, there may be several (for example, two) second fitting parts 351, several (for example, two) hinged shafts, and several (for example, two) hinged seats. One second fitting part 351 correspondingly fits an arc-shaped sliding slot 3477 of one base 3478, and one hinged shaft correspondingly fits one hinged seat. Certainly, positions of the hinged shaft and the hinged seat may be interchanged; in other words, the hinged shaft is located at the end that is of the second housing 12 and that is away from the hinge 14, and the hinged seat is located at the second end of the supporting member 35. Alternatively, another structure may be used to implement the rotational connection based on a requirement; for example, fitting between a pin and a hole is used.

In the third implementation, in the process in which the second housing 12 approaches the first housing 13, the second housing 12 may apply torque to the supporting member 35 from the rotation part 353, so that the fitting post 3511 slides in the arc-shaped sliding slot 3477, and the fitting post 3511 also rotates around the rotation part 353. In addition, during sliding, the fitting post 3511 gradually approaches the body appearance surface 123; in other words, the first end 3511 of the supporting member 35 gradually approaches the body appearance surface 123. Finally, when the second housing 12 and the first housing 13 are entirely attached to each other, a distance between the first end 3511 and the body appearance surface 123 is minimum. In this case, the second bearing part 352 may adapt to the shape of the second housing 12, for example, the second bearing part 352 may be basically parallel to the second housing 12.

On the contrary, in a process in which the second housing 12 moves away the first housing 13, the second housing 12 may apply reverse torque to the supporting member 35 from the rotation part 353, so that the fitting post 3511 slides in a reverse direction in the arc-shaped sliding slot 3477, and the fitting post 3511 also rotates around the rotation part 353. In addition, the fitting post 3511 gradually moves away from the body appearance surface 123 during sliding. Finally, when the second housing 12 and the first housing 13 are entirely flattened, a distance between the first end 3511 and the body appearance surface 123 is maximum. In this case, the second bearing part 352 may be basically coplanar with the first housing 13.

A relative kinematic relationship between the second housing 12 and the supporting member 35 in the third implementation is described more intuitively below with reference to a simplified diagram of mechanical motion.

Similar to the first implementation, FIG. 47a to FIG. 47c are simplified diagrams of mechanical motion that are obtained, based on an expression manner of a skeleton of mechanism in the mechanical field, by representing two components, namely, the second housing 12 and the supporting member 35, by lines, representing the second rotating shaft 144 and the base 3478 by rack symbols, and representing a connection relationship between the second housing 12 and the second rotating shaft 144, a connection relationship between the second housing 12 and the supporting member 35, and a connection relationship between the supporting member 35 and the base 3478 by motion sub-symbols. An end that is of the second housing 12 and that is close to the second rotating shaft 144 rotates around the second rotating shaft 144, and the end of the second housing 12 and the second rotating shaft 144 form a revolute joint. The second end of the supporting member 35 and the end that is of the second housing 12 and that is away from the second rotating shaft 144 form a revolute joint, and the first end 3511 of the supporting member 35 and the base 3478 form a sliding joint.

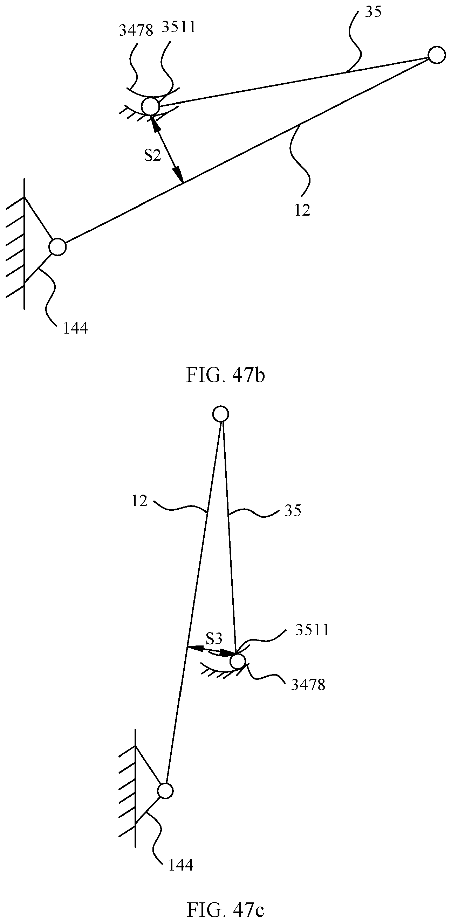

FIG. 47a to FIG. 47c reflect a change of the distance from the first end 3511 of the supporting member 35 to the body appearance surface 123 in the process in which the second housing 12 approaches the first housing 13. FIG. 47a shows that when the second housing 12 is at a flat position, the distance from the first end 3511 to the body appearance surface 123 is S1. FIG. 47b shows that when the second housing 12 is at a specified position (not reaching a folded position), the distance from the first end 3511 to the body appearance surface 123 is S2. FIG. 47c shows that when the second housing 12 is at the folded position, the distance from the first end 3511 to the body appearance surface 123 is S3. It can be learned from FIG. 47a to FIG. 47c that S1 to S3 sequentially decrease; in other words, the first end 3511 of the supporting member 35 gradually approaches the body appearance surface 123.

In another implementation, in the process in which the second housing 12 approaches the first housing 13, the distance from the first end 3511 to the body appearance surface 123 may not sequentially decrease, but the distance reciprocates when the supporting member 35 is at a specific position, for example, a distance at a subsequent position is greater than or equal to a distance at a previous position. However, the distance is generally in a decreasing trend.

On the contrary, FIG. 47c to FIG. 47a reflect a change of the distance from the first end 3511 to the body appearance surface 123 in the process in which the second housing 12 and the first housing 13 are separated from each other. It is easily learned that S3 to S1 sequentially increase; in other words, the first end 3511 gradually moves away from the body appearance surface 123.

In another implementation, in the process in which the second housing 12 and the first housing 13 are separated from each other, the distance from the first end 3511 of the supporting member 35 to the body appearance surface 123 may not sequentially increase, but the distance reciprocates when the supporting member 35 is at a specific position, for example, a distance at a subsequent position is less than or equal to a distance at a previous position. However, the distance is generally in an increasing trend.

In the third implementation, a thickness of the electronic device 10 during folding can also be reduced, so that a position of the second flat part 163 in the folded state can match an appearance form of the second housing 12, and the product has better designability and productivity. Therefore, bending of the flexible screen 16 can be reduced, and damage caused by excessive bending of the flexible screen 16 can be avoided. In this way, it is convenient to place all electronic components in the first housing 13, and difficulty for sealing and protecting the entire machine is reduced. A derivation process of the foregoing technical effect is the same as corresponding description in the first implementation, and details are not described herein again.

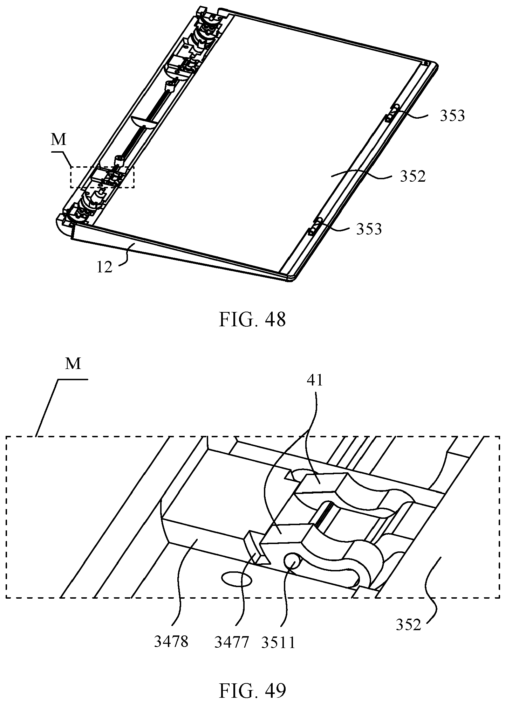

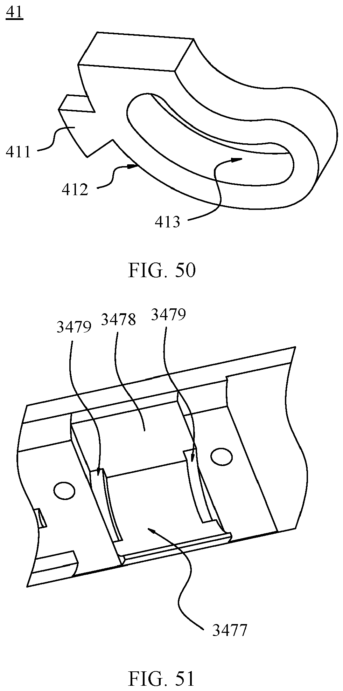

As shown in FIG. 48 to FIG. 50, in a fourth implementation, different from the third implementation, the hinge may further include a conversion bracket 41, and the conversion bracket 41 is located between the fitting post 3511 and the arc-shaped sliding slot 3477. The conversion bracket 41 may be, for example, sleeve-shaped, and the conversion bracket 41 may have an arc-shaped cavity 413 that is in a similar shape as a slot wall of the arc-shaped sliding slot 3477. The conversion bracket 41 is disposed in the arc-shaped sliding slot 3477, the conversion bracket 41 may have an arc-shaped surface 412 that adapts to the slot wall of the arc-shaped sliding slot 3477, and the arc-shaped surface 412 may slide along the slot wall of the arc-shaped sliding slot 3477. With reference to FIG. 51, to limit the conversion bracket 41, a partial slot wall of the arc-shaped sliding slot 3477 may be recessed to form an arc-shaped sliding slot 3479, and a sliding block 411 may be protruded on the arc-shaped surface 412 of the conversion bracket 41. The sliding block 411 can slide in the arc-shaped sliding slot 3479. At least one end of the arc-shaped sliding slot 3479 may be closed to define an extreme sliding position of the sliding block 411. There may be two conversion brackets 41 and two arc-shaped sliding slots 3479. The two conversion brackets 41 are distributed at intervals in parallel, and the two arc-shaped sliding slots 3479 are distributed at intervals in parallel. One conversion bracket 41 correspondingly fits one arc-shaped sliding slot 3479. In another implementation, a structure of the conversion bracket is not limited to the foregoing description, provided that the conversion bracket can fit the arc-shaped sliding slot 3477 through sliding.

As shown in FIG. 44, FIG. 49, and FIG. 50, both two opposite ends of the fitting post 3511 may exceed the connection part 3512, and an end that is of the fitting post 3511 and that exceeds the connection part 3512 is inserted into the arc-shaped cavity 413 of the conversion bracket 41, and may slide along an inner wall of the arc-shaped cavity 413. Two ends of the fitting post 3511 that exceed the connection part 3512 fit the two conversion brackets 41 in a one-to-one manner.

In the fourth implementation, when the second housing 12 applies torque to the supporting member 15 from the rotation part 353, the fitting post 3511 slides in the arc-shaped cavity 413 of the conversion bracket 41 (in other words, the fitting post 3511 slides along a circumference of the arc-shaped sliding slot 3477 toward the arc-shaped sliding slot 3477), and the conversion bracket 41 also slides along a guide rail of the arc-shaped sliding slot 3477. Therefore, Total sliding distance of the fitting post 3511 relative to the arc-shaped sliding slot 3477 = Sliding distance of the fitting post 3511 relative to the arc-shaped cavity 413 + Sliding distance of the conversion bracket 41 relative to the arc-shaped sliding slot 3477. The total sliding distance can meet folding and unfolding of the folding apparatus 11, and is a design value designed based on an actual product requirement. The sliding distance of the conversion bracket 41 relative to the arc-shaped sliding slot 3477 depends on a length of the arc-shaped sliding slot 3477 (the length is a circumferential dimension of the arc-shaped sliding slot 3477). The length of the arc-shaped sliding slot 3477 may affect a contour dimension of the base 3478 and further affect a width of the holder 147 (the width is a dimension of the holder 147 in the foregoing thickness direction when the folding apparatus 11 is folded), and the width of the holder 147 determines a maximum thickness of the electronic device 10 during folding. It can be learned from the foregoing mathematical relationship that, when the sliding distance of the conversion bracket 41 relative to the arc-shaped sliding slot 3477 is less than the total sliding distance, the total sliding distance is implemented, and only a relatively small sliding distance needs to be generated by the conversion bracket 41 relative to the arc-shaped sliding slot 3477. Therefore, in the fourth implementation, through design of the conversion bracket 41, it can be ensured that when the total sliding distance is determined, the length of the arc-shaped sliding slot 3477 is shortened, and the width of the holder 147 is reduced, so that the maximum thickness of the electronic device 10 during folding is reduced. In another implementation, design of the conversion bracket 41 is not indispensable.

## Claims

1. An electronic device (10), comprising
a flexible screen (16), a hinge (14), a first housing (13), a second housing (12), and a supporting member (15); wherein
the flexible screen (16) comprises a first flat part (161), a bending part (162), and a second flat part (163), and the bending part (162) is connected between the first flat part (161) and the second flat part (163);
two opposite sides of the hinge (14) are separately connected to the first housing (13) and the second housing (12), the hinge (14) is configured to implement relative rotation between the second housing (12) and the first housing (13) through mechanical motion, the second housing (12) has a body appearance surface, and the first flat part (61) is fastened to the first housing (13);
the supporting member (15) is accommodated in the second housing (12), the supporting member (15) has a first end and a second end that are opposite to each other, the first end is connected to the hinge (14), the second end is movably connected to an end that is of the second housing (12) and that is away from the hinge (14), and the second flat part (163) is fastened to a surface that is of the supporting member (15) and that is away from the body appearance surface; and
in a process in which the second housing (12) and the first housing (13) approach each other, the supporting member (15) is configured to rotate relative to the first housing (13), and the first end is configured to drive the second flat part (163) to approach the body appearance surface,
wherein the hinge (14) comprises a base and a moving member (146), the base has an arc-shaped sliding slot, one end of the moving member fits the arc-shaped sliding slot through sliding, the other opposite end of the moving member is fixedly connected to the first end, and the second end and the end that is of the second housing (12) and that is away from the hinge (14) form a sliding connection and a rotational connection.

2. The electronic device (10) according to claim 1, wherein
there is a guide rail at the end that is of the second housing and that is away from the hinge, there is a guide post at the second end, the guide post fits the guide rail, and the guide post is configured to slide and rotate relative to the guide rail.

3. The electronic device (10) according to claim 1, wherein
the hinge (14) comprises a base and a moving member (146) , the base has an arc-shaped sliding slot, one end of the moving member fits the arc-shaped sliding slot through sliding, the other opposite end of the moving member is slidably connected to the first end, and the second end is rotatably connected to the end that is of the second housing (12) and that is away from the hinge (14).

4. The electronic device (10) according to claim 3, wherein
the supporting member (15) comprises a first bearing part and a first fitting part, the first end and the second end are separately two opposite ends of the first bearing part, the first fitting part is disposed on a surface that is of the first end and that faces the second housing (12), and the other opposite end of the moving member is slidably connected to the first fitting part located at the first end.

5. The electronic device (10) according to claim 1, wherein
the hinge (14) comprises a base, the base has an arc-shaped sliding slot, the first end is capable of sliding relative to the arc-shaped sliding slot along a circumference of the arc-shaped sliding slot, and the second end is rotatably connected to the end that is of the second housing (12) and that is away from the hinge.

6. The electronic device (10) according to claim 5, wherein
the first end fits the arc-shaped sliding slot through sliding.

7. The electronic device (10) according to claim 5, wherein
the hinge (14) comprises a conversion bracket, the conversion bracket fits the arc-shaped sliding slot through sliding, and the first end fits the conversion bracket through sliding.

8. The electronic device (10) according to claim 7, wherein
the conversion bracket has an arc-shaped cavity, a shape of the arc-shaped cavity is corresponding to a shape of the arc-shaped sliding slot, and the first end fits the arc-shaped cavity through sliding.

9. The electronic device (10) according to any one of claims 5 to 8, wherein
the supporting member (15) comprises a second fitting part, a second bearing part, and a rotation part, the second bearing part is connected between the second fitting part and the rotation part, an end that is of the second fitting part and that is away from the second bearing part is used as the first end, and the rotation part is used as the second end.

10. The electronic device (10) according to claim 9, wherein
the second fitting part comprises a connection part and a fitting post, the connection part is connected between the second bearing part and the fitting post, and the fitting post is used as the first end.

11. The electronic device (10) according to any one of claims 1 to 10, wherein
a thickness of an end that is of the second housing (12) and that is close to the hinge (14) is greater than a thickness of the end that is of the second housing (12) and that is away from the hinge (14), and when the second housing (12) and the first housing (13) approach each other, a thickness of an end that is of the electronic device (10) and that is close to the hinge (14) is greater than a thickness of an end that is of the electronic device (10) and that is away from the hinge (14).

12. The electronic device (10) according to claim 11, wherein
the second housing (12) comprises a housing part and a cover plate, the housing part is connected between the hinge and the cover plate, the cover plate is fixedly connected to the housing part, and the body appearance surface comprises a first body appearance surface of the housing part and a second body appearance surface of the cover plate.

13. The electronic device (10) according to claim 12, wherein
there is a step between the second body appearance surface and the first body appearance surface.

14. The electronic device (10) according to any one of claims 1 to 13, wherein
the electronic device (10) comprises a circuit board and a first functional component, the circuit board is electrically connected to the first functional component, both the circuit board and the first functional component are mounted in the first housing, and the first flat part covers the circuit board and the first functional component.

## Patentansprüche

1. Elektronische Vorrichtung (10), umfassend:
einen flexiblen Bildschirm (16), ein Scharnier (14), ein erstes Gehäuse (13), ein zweites Gehäuse (12) und ein Stützelement (15); wobei
der flexible Bildschirm (16) einen ersten flachen Teil (161), einen Biegeteil (162) und einen zweiten flachen Teil (163) umfasst und der Biegeteil (162) zwischen dem ersten flachen Teil (161) und dem zweiten flachen Teil (163) verbunden ist;
zwei gegenüberliegende Seiten des Scharniers (14) separat mit dem ersten Gehäuse (13) und dem zweiten Gehäuse (12) verbunden sind, das Scharnier (14) dazu konfiguriert ist, eine relative Drehung zwischen dem zweiten Gehäuse (12) und dem ersten Gehäuse (13) durch mechanische Bewegung zu implementieren, das zweite Gehäuse (12) eine Körpererscheinungsoberfläche aufweist und der erste flache Teil (61) an dem ersten Gehäuse (13) befestigt ist;
das Stützelement (15) in dem zweiten Gehäuse (12) untergebracht ist, das Stützelement (15) ein erstes Ende und ein zweites Ende aufweist, die einander gegenüberliegen, das erste Ende mit dem Scharnier (14) verbunden ist, das zweite Ende beweglich mit einem Ende, das zu dem zweiten Gehäuse (12) gehört und das von dem Scharnier (14) entfernt ist, verbunden ist und der zweite flache Teil (163) an einer Oberfläche befestigt ist, die zu dem Stützelement (15) gehört und die von der Körpererscheinungsoberfläche entfernt ist; und
bei einem Prozess, bei dem sich das zweite Gehäuse (12) und das erste Gehäuse (13) einander annähern, das Stützelement (15) dazu konfiguriert ist, sich relativ zu dem ersten Gehäuse (13) zu drehen, und das erste Ende dazu konfiguriert ist, den zweiten flachen Teil (163) anzutreiben, sodass er sich der Körpererscheinungsoberfläche annähert,
wobei das Scharnier (14) eine Basis und ein sich bewegendes Element (146) umfasst, die Basis einen bogenförmigen Gleitschlitz aufweist, sich ein Ende des sich bewegenden Elements durch Gleiten in den bogenförmigen Gleitschlitz einpasst, das andere, gegenüberliegende Ende des sich bewegenden Elements feststehend mit dem ersten Ende verbunden ist und das zweite Ende und das Ende, das zu dem zweiten Gehäuse (12) gehört und das von dem Scharnier (14) entfernt ist, eine Gleitverbindung und eine Drehverbindung ausbilden.

2. Elektronische Vorrichtung (10) nach Anspruch 1, wobei
an dem Ende, das zu dem zweiten Gehäuses gehört und das von dem Scharnier entfernt ist, eine Führungsschiene vorhanden ist, an dem zweiten Ende ein Führungsstab vorhanden ist, sich der Führungsstab in die Führungsschiene einpasst und der Führungsstab dazu konfiguriert ist, sich relativ zu der Führungsschiene zu drehen und zu gleiten.

3. Elektronische Vorrichtung (10) nach Anspruch 1, wobei
das Scharnier (14) eine Basis und ein sich bewegendes Element (146) umfasst, die Basis einen bogenförmigen Gleitschlitz aufweist, sich ein Ende des sich bewegenden Elements durch Gleiten in den bogenförmigen Gleitschlitz einpasst, das andere, gegenüberliegende Ende des sich bewegenden Elements gleitend mit dem ersten Ende verbunden ist und das zweite Ende drehbar mit dem Ende, das zu dem zweiten Gehäuse (12) gehört und das von dem Scharnier (14) entfernt ist, verbunden ist.

4. Elektronische Vorrichtung (10) nach Anspruch 3, wobei
das Stützelement (15) einen ersten Lagerteil und einen ersten Passteil umfasst, das erste Ende und das zweite Ende separat zwei gegenüberliegende Enden des ersten Lagerteils sind, der erste Passteil auf einer Oberfläche angeordnet ist, die zu dem ersten Ende gehört und die dem zweiten Gehäuse (12) zugewandt ist, und das andere, gegenüberliegende Ende des sich bewegenden Elements gleitend mit dem ersten Passteil verbunden ist, das sich an dem ersten Ende befindet.

5. Elektronische Vorrichtung (10) nach Anspruch 1, wobei
das Scharnier (14) eine Basis umfasst, die Basis einen bogenförmigen Gleitschlitz aufweist, das erste Ende in der Lage ist, relativ zu dem bogenförmigen Gleitschlitz entlang eines Umfangs des bogenförmigen Gleitschlitzes zu gleiten, und das zweite Ende drehbar mit dem Ende, das zu dem zweiten Gehäuse (12) gehört und das von dem Scharnier entfernt ist, verbunden ist.

6. Elektronische Vorrichtung (10) nach Anspruch 5, wobei
sich das erste Ende durch Gleiten in den bogenförmigen Gleitschlitz einpasst.

7. Elektronische Vorrichtung (10) nach Anspruch 5, wobei
das Scharnier (14) eine Umformungshalterung umfasst, sich die Umformungshalterung durch Gleiten in den bogenförmigen Gleitschlitz einpasst und sich das erste Ende durch Gleiten in die Umformungshalterung einpasst.

8. Elektronische Vorrichtung (10) nach Anspruch 7, wobei
die Umformungshalterung einen bogenförmigen Hohlraum aufweist, eine Form des bogenförmigen Hohlraums einer Form des bogenförmigen Gleitschlitzes entspricht und sich das erste Ende durch Gleiten in den bogenförmigen Hohlraum einpasst.

9. Elektronische Vorrichtung (10) nach einem der Ansprüche 5 bis 8, wobei
das Stützelement (15) einen zweiten Passteil, einen zweiten Lagerteil und einen Drehteil umfasst, wobei der zweite Lagerteil zwischen dem zweiten Passteil und dem Drehteil verbunden ist, ein Ende, das zu dem zweiten Passteil gehört und das von dem zweiten Lagerteil entfernt ist, als das erste Ende verwendet wird und der Drehteil als das zweite Ende verwendet wird.

10. Elektronische Vorrichtung (10) nach Anspruch 9, wobei
der zweite Passteil einen Verbindungsteil und einen Passstab umfasst, der Verbindungsteil zwischen dem zweiten Lagerteil und dem Passstab verbunden ist und der Passstab als das erste Ende verwendet wird.

11. Elektronische Vorrichtung (10) nach einem der Ansprüche 1 bis 10, wobei
eine Dicke eines Endes, das zu dem zweiten Gehäuse (12) gehört und das nahe des Scharniers (14) vorhanden ist, größer als eine Dicke des Endes ist, das zu dem zweiten Gehäuse (12) gehört und das von dem Scharnier (14) entfernt ist, und, wenn sich das zweite Gehäuse (12) und das erste Gehäuse (13) einander annähern, eine Dicke eines Endes, das zu der elektronischen Vorrichtung (10) gehört und das nahe des Scharniers (14) vorhanden ist, größer als eine Dicke eines Endes ist, das zu der elektronischen Vorrichtung (10) gehört und das von dem Scharnier (14) entfernt ist.

12. Elektronische Vorrichtung (10) nach Anspruch 11, wobei
das zweite Gehäuse (12) einen Gehäuseteil und eine Abdeckplatte umfasst, der Gehäuseteil zwischen dem Scharnier und der Abdeckplatte verbunden ist, die Abdeckplatte feststehend mit dem Gehäuseteil verbunden ist und die Körpererscheinungsoberfläche eine erste Körpererscheinungsoberfläche des Gehäuseteils und eine zweite Körpererscheinungsoberfläche der Abdeckplatte umfasst.

13. Elektronische Vorrichtung (10) nach Anspruch 12, wobei
zwischen der zweiten Körpererscheinungsoberfläche und der ersten Körpererscheinungsoberfläche ein Absatz vorhanden ist.

14. Elektronische Vorrichtung (10) nach einem der Ansprüche 1 bis 13, wobei
die elektronische Vorrichtung (10) eine Leiterplatte und eine erste Funktionskomponente umfasst, die Leiterplatte mit der ersten Funktionskomponente elektrisch verbunden ist, sowohl die Leiterplatte als auch die erste Funktionskomponente in dem ersten Gehäuse montiert sind und der erste flache Teil die Leiterplatte und die erste Funktionskomponente abdeckt.

## Revendications

1. Dispositif électronique (10), comprenant :
un écran flexible (16), une charnière (14), un premier boîtier (13), un second boîtier (12) et un élément de support (15) ; dans lequel
l'écran flexible (16) comprend une première partie plate (161), une partie courbée (162) et une seconde partie plate (163), et la partie courbée (162) est reliée entre la première partie plate (161) et la seconde partie plate (163) ;
deux côtés opposés de la charnière (14) sont reliés séparément au premier boîtier (13) et au second boîtier (12), la charnière (14) est configurée pour mettre en œuvre une rotation relative entre le second boîtier (12) et le premier boîtier (13) par un mouvement mécanique, le second boîtier (12) présente une surface d'apparence corporelle, et la première partie plate (61) est fixée au premier boîtier (13) ;
l'élément de support (15) est logé dans le second boîtier (12), l'élément de support (15) présente une première extrémité et une seconde extrémité opposées l'une à l'autre, la première extrémité est reliée à la charnière (14), la seconde extrémité est reliée de manière mobile à une extrémité qui appartient au second boîtier (12) et qui est éloignée de la charnière (14), et la seconde partie plate (163) est fixée à une surface qui appartient à l'élément de support (15) et qui est éloignée de la surface d'apparence corporelle ; et
dans un processus dans lequel le second boîtier (12) et le premier boîtier (13) se rapprochent l'un de l'autre, l'élément de support (15) est configuré pour tourner par rapport au premier boîtier (13), et la première extrémité est configurée pour entraîner la seconde partie plate (163) pour approcher la surface d'apparence corporelle,
dans lequel la charnière (14) comprend une base et un élément mobile (146), la base présente une fente coulissante en forme d'arc, une extrémité de l'élément mobile s'ajuste à la fente coulissante en forme d'arc par coulissement, l'autre extrémité opposée de l'élément mobile est reliée de manière fixe à la première extrémité, et la seconde extrémité et l'extrémité qui appartient au second boîtier (12) et qui est éloignée de la charnière (14) forment une liaison coulissante et une liaison rotative.

2. Dispositif électronique (10) selon la revendication 1, dans lequel
il y a un rail de guidage à l'extrémité qui appartient au second boîtier et qui est éloignée de la charnière, il y a un montant de guidage à la seconde extrémité, le montant de guidage s'ajuste au rail de guidage, et le montant de guidage est configuré pour coulisser et tourner par rapport au rail de guidage.

3. Dispositif électronique (10) selon la revendication 1, dans lequel
la charnière (14) comprend une base et un élément mobile (146), la base présente une fente coulissante en forme d'arc, une extrémité de l'élément mobile s'ajuste à la fente coulissante en forme d'arc par coulissement, l'autre extrémité opposée de l'élément mobile est reliée de manière coulissante à la première extrémité, et la seconde extrémité est reliée de manière rotative à l'extrémité qui appartient au second boîtier (12) et qui est éloignée de la charnière (14).

4. Dispositif électronique (10) selon la revendication 3, dans lequel
l'élément de support (15) comprend une première partie de support et une première partie de montage, la première extrémité et la seconde extrémité sont séparément deux extrémités opposées de la première partie de support, la première partie de montage est disposée sur une surface qui appartient à la première extrémité et qui fait face au second boîtier (12), et l'autre extrémité opposée de l'élément mobile est reliée de manière coulissante à la première partie de montage située au niveau de la première extrémité.

5. Dispositif électronique (10) selon la revendication 1, dans lequel
la charnière (14) comprend une base, la base possède une fente coulissante en forme d'arc, la première extrémité est capable de glisser par rapport à la fente coulissante en forme d'arc le long d'une circonférence de la fente coulissante en forme d'arc, et la seconde extrémité est reliée de manière rotative à l'extrémité qui appartient au second boîtier (12) et qui est éloignée de la charnière.

6. Dispositif électronique (10) selon la revendication 5, dans lequel
la première extrémité s'adapte à la fente coulissante en forme d'arc par coulissement.

7. Dispositif électronique (10) selon la revendication 5, dans lequel
la charnière (14) comprend un support de conversion, le support de conversion s'adapte à la fente coulissante en forme d'arc par coulissement, et la première extrémité s'ajuste au support de conversion par coulissement.

8. Dispositif électronique (10) selon la revendication 7, dans lequel
le support de conversion présente une cavité en forme d'arc, une forme de la cavité en forme d'arc correspond à une forme de la fente coulissante en forme d'arc, et la première extrémité s'ajuste à la cavité en forme d'arc par coulissement.

9. Dispositif électronique (10) selon l'une quelconque des revendications 5 à 8, dans lequel :
l'élément de support (15) comprend une seconde partie de montage, une seconde partie de support et une partie de rotation, la seconde partie de support est reliée entre la seconde partie de montage et la partie de rotation, une extrémité qui appartient à la seconde partie de montage et qui est éloignée de la seconde partie de support est utilisée comme la première extrémité, et la partie de rotation est utilisée comme seconde extrémité.

10. Dispositif électronique (10) selon la revendication 9, dans lequel
la seconde partie de montage comprend une partie de connexion et une tige de montage, la partie de connexion est reliée entre la seconde partie de support et la tige de montage, et la tige de montage est utilisée comme première extrémité.

11. Dispositif électronique (10) selon l'une quelconque des revendications 1 à 10, dans lequel
une épaisseur d'une extrémité qui appartient au second boîtier (12) et qui est proche de la charnière (14) est supérieure à une épaisseur de l'extrémité qui appartient au second boîtier (12) et qui est éloignée de la charnière (14), et lorsque le second boîtier (12) et le premier boîtier (13) se rapprochent l'un de l'autre, une épaisseur d'une extrémité qui appartient au dispositif électronique (10) et qui est proche de la charnière (14) est supérieure à une épaisseur d'une extrémité qui appartient au dispositif électronique (10) et qui est éloignée de la charnière (14).

12. Dispositif électronique (10) selon la revendication 11, dans lequel
le second boîtier (12) comprend une partie boîtier et une plaque de recouvrement, la partie boîtier est reliée entre la charnière et la plaque de recouvrement, la plaque de recouvrement est reliée de manière fixe à la partie boîtier, et la surface d'apparence corporelle comprend une première surface d'apparence corporelle de la partie boîtier et une seconde surface d'apparence corporelle de la plaque de recouvrement.

13. Dispositif électronique (10) selon la revendication 12, dans lequel
il y a un pas entre la seconde surface d'apparence corporelle et la première surface d'apparence corporelle.

14. Dispositif électronique (10) selon l'une quelconque des revendications 1 à 13, dans lequel
le dispositif électronique (10) comprend une carte de circuit imprimé et un premier composant fonctionnel, la carte de circuit imprimé est connectée électriquement au premier composant fonctionnel, la carte de circuit imprimé et le premier composant fonctionnel sont tous deux montés dans le premier boîtier, et la première partie plate recouvre la carte de circuit imprimé et le premier composant fonctionnel.
